# EUROPEAN PATENT SPECIFICATION

(11) **EP 3 402 104 B1**
(45) Date of publication and mention of the grant of the patent: **05.08.2020**
(21) Application number: 17170858.9
(22) Date of filing: 12.05.2017
(51) Int. Cl.: H04L 1/06, H04B 7/06, H04L 27/26

(54) **METHODS AND DEVICES FOR 3D MODULATION WITH BEAM HOPPING**
VERFAHREN UND VORRICHTUNGEN ZUR 3D-MODULATION MIT STRAHLSPRINGEN
PROCÉDÉS ET DISPOSITIFS DE MODULATION 3D AVEC SAUT DE FAISCEAU

(43) Date of publication of application: 14.11.2018
(73) Proprietor: Intel IP Corporation, Santa Clara, CA 95054 (US)
(72) Inventor: DREWES, Christian, 82110 Germering (DE); MAJEED, Erfan, 47059 Duisburg (DE); BRUCK, Guido, 46562 Voerde (DE); KARLS, Ingolf, 85622 Feldkirchen (DE); MUECK, Markus Dominik, 85579 Neubiberg (DE); JUNG, Peter, Duisburg 47057 (DE); YOUSSEF, Ziad, 47057 Duisburg (DE)
(74) Representative: Viering, Jentschura & Partner mbB Patent- und Rechtsanwälte

(56) References cited:
- US-A1- 2003 038 741
- YIGIT Z ET AL: "Low-complexity detection of quadrature spatial modulation", ELECTRONICS LET, IEE STEVENAGE, GB, vol. 52, no. 20, 29 September 2016 (2016-09-29), pages 1729-1731, XP006058473, ISSN: 0013-5194, DOI: 10.1049/EL.2016.1583
- QIAN TANG ET AL: "A New Low-Complexity Near-ML Detection Algorithm for Spatial Modulation", IEEE WIRELESS COMMUNICATIONS LETTERS, IEEE, PISCATAWAY, NJ, USA, vol. 2, no. 1, 1 February 2013 (2013-02-01), pages 90-93, XP011495701, ISSN: 2162-2337, DOI: 10.1109/WCL.2012.120312.120601
- MESLEH R Y ET AL: "Spatial Modulation", IEEE TRANSACTIONS ON VEHICULAR TECHNOLOGY, IEEE SERVICE CENTER, PISCATAWAY, NJ, US, vol. 57, no. 4, 1 July 2008 (2008-07-01), pages 2228-2241, XP011224260, ISSN: 0018-9545, DOI: 10.1109/TVT.2007.912136
- SHINYA SUGIURA ET AL: "Reduced-Complexity Coherent Versus Non-Coherent QAM-Aided Space-Time Shift Keying", IEEE TRANSACTIONS ON COMMUNICATIONS, IEEE SERVICE CENTER, PISCATAWAY, NJ. USA, vol. 59, no. 11, 1 November 2011 (2011-11-01), pages 3090-3101, XP011389227, ISSN: 0090-6778, DOI: 10.1109/TCOMM.2011.100411.110154
- DI RENZO MARCO ET AL: "Spatial Modulation for Generalized MIMO: Challenges, Opportunities, and Implementation", PROCEEDINGS OF THE IEEE, IEEE. NEW YORK, US, vol. 102, no. 1, 1 January 2014 (2014-01-01), pages 56-103, XP011534303, ISSN: 0018-9219, DOI: 10.1109/JPROC.2013.2287851 [retrieved on 2013-12-17]

## Description

### Technical Field

Various embodiments relate generally to methods and devices for 3D modulation with beam hopping.

### Background

Many radio communication technologies use constellation-based modulation techniques to transmit data at the physical layer. In such constellation-based modulation techniques, a modulator separates a transmit bit stream into transmit bit vectors of a specific length and then maps each transmit bit vector onto a constellation of points, where each point corresponds to a different transmit bit vector and associated modulation symbol. The modulator then selects the modulation symbol for each transmit bit vector and provides the modulation symbol to the radio circuitry for subsequent transmission as wireless radio signals.

Constellations with larger numbers of points and modulation symbols, known as the 'modulation order', can enable higher data rates due to the ability to encode more bits into each transmitted modulation symbol. However, as higher numbers of points in the constellation results in a higher density of points, high modulation order may also be more susceptible to noise and interference as the counterpart demodulator may have difficulty in determining which specific point in the correlation corresponds to each received modulation symbol.

Yigit, Zehra et al., "Low-Complexity Detection of Quadrature Spatial Modulation. Electronics", 2016-09-29, pages 1729-1731, XP006058473, ISSN: 0013-5194, DOI: 10.1049/EL.2016.1583 describes quadrature spatial modulation (QSM) is a recently proposed multiple-input multiple-output transmission scheme which improves the spectral efficiency of classical spatial modulation (SM) by increasing the number of information bits transmitted by antenna indices. In QSM, a complex data symbol is decomposed into its real and imaginary components; then, these two components are independently transmitted using the SM principle. A low-complexity, near-maximum likelihood (ML) error performance achieving detection scheme is proposed for QSM to reduce the overall computational complexity of the ML detector. First, the proposed detector determines the set of most probable active transmit antennas and the corresponding possible transmission patterns. Then, ML-based detection is used to determine the transmitted complex data vector by performing a search over these transmission patterns and M-ary constellation symbols. It has been shown via computer simulations that the proposed detection algorithm exhibits near-ML bit error rate performance with considerably lower decoding complexity.

Qian Tang et al., "A New Low-Complexity Near-ML Detection Algorithm for Spatial Modulation", IEEE Wireless Communications Letters, vol. 2, no. 1, February 2013, pages 90-93, XP011495701, ISSN: 2162-2337, DOI: 10.1109/WCL.2012.120312.120601 describes a distance-based ordered detection (DBD) algorithm for spatial modulation (SM) to reduce the receiver complexity and achieve a near maximum likelihood (ML) performance. The proposed algorithm firstly compensates the channel attenuation and obtains the estimated symbols with transmit antenna indices, then orders the indices based on the distances between these symbols and their demodulation constellations. A searching method is developed to obtain the final decision through a trade-off between performance and complexity. The equivalence between DBD and ML algorithms is also proved by theoretical analysis. Furthermore, a new low-complexity soft output DBD (SODBD) algorithm is developed for coded SM systems. The simulation results show that DBD algorithm has a close performance to ML algorithm while effectively reducing the complexity compared to conventional near-ML algorithms.

US 2003/0038741 A1 describes a system for determining the scan type of a signal, such as a radar signal, includes a scan detector, a transformer (e.g., an FFT algorithm), a correlator, and a decision block. The signal is received and processed by the scan detector. The scan detector provides an envelope signal, representing the scan type of the received signal. The envelope signal is transformed, typically from a time domain signal to a frequency domain signal, by any of several processes including a Fourier transform, a Laplace transform, an FFT, or a DFT. The transformed envelope signal is compared to several scan data sets by the correlator. Each scan data set represents a particular scan type. If the decision block determines that the comparison between the transformed envelope signal and a scan data set meets (or exceeds) a degree of similarity, the scan type of the received signal is determined to be the scan type of that scan data set.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIG. **1** shows an exemplary communication network according to some aspects;
FIG. **2** shows an exemplary internal configuration of a terminal device according to some aspects;
FIG. **3** shows an exemplary internal configuration of a network access node according to some aspects;
FIG. **4** shows an exemplary communication network interfacing with external data networks according to some aspects;
FIG. **5** shows an exemplary depiction of 3D modulation with beam-hopping according to some aspects;
FIG. **6** shows an exemplary depiction of transmission of a first transmit bit vector with 3D modulation with beam-hopping according to some aspects;
FIG. **7** shows an exemplary depiction of transmission of a second transmit bit vector with 3D modulation with beam-hopping according to some aspects;
FIG. **8** shows an exemplary internal configuration of demodulation components of a baseband modem according to some aspects;
FIG. **9** shows an exemplary method of demodulating received modulation symbols for 3D modulation with beam-hopping according to some aspects;
FIG. **10** shows an exemplary resource grid according to some aspects;
FIG. **11** shows an exemplary chart of spectrum envelopes according to some aspects;
FIG. **12** shows an exemplary depiction of reduced candidate ML detection according to some aspects;
FIG. **13** shows an exemplary chart of spectrum envelopes in an LOS case according to some aspects;
FIG. **14** shows an exemplary depiction of potential demodulation errors in LOS cases according to some aspects;
FIG. **15** shows an exemplary internal configuration of demodulation components of a baseband modem with dynamic demodulation adaptation according to some aspects;
FIG. **16** shows a first exemplary method of processing and demodulating wireless signals according to some aspects; and
FIG. **17** shows a second exemplary method of processing and demodulating wireless signals according to some aspects.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The words "plurality" and "multiple" in the description or the claims expressly refer to a quantity greater than one. The terms "group (of)", "set [of]", "collection (of)", "series (of)", "sequence (of)", "grouping (of)", etc., and the like in the description or in the claims refer to a quantity equal to or greater than one, i.e. one or more. Any term expressed in plural form that does not expressly state "plurality" or "multiple" likewise refers to a quantity equal to or greater than one. The terms "proper subset", "reduced subset", and "lesser subset" refer to a subset of a set that is not equal to the set, i.e. a subset of a set that contains less elements than the set.

It is appreciated that any vector and/or matrix notation utilized herein is exemplary in nature and is employed solely for purposes of explanation. Accordingly, it is understood that the approaches detailed in this disclosure are not limited to being implemented solely using vectors and/or matrices, and that the associated processes and computations may be equivalently performed with respect to sets, sequences, groups, etc., of data, observations, information, signals, samples, symbols, elements, etc. Furthermore, it is appreciated that references to a "vector" may refer to a vector of any size or orientation, e.g. including a 1x1 vector (e.g. a scalar), a 1xM vector (e.g. a row vector), and an Mx1 vector (e.g. a column vector). Similarly, it is appreciated that references to a "matrix" may refer to matrix of any size or orientation, e.g. including a 1x1 matrix (e.g. a scalar), a 1xM matrix (e.g. a row vector), and an Mx1 matrix (e.g. a column vector).

A "circuit" as used herein is understood as any kind of logic-implementing entity, which may include special-purpose hardware or a processor executing software. A circuit may thus be an analog circuit, digital circuit, mixed-signal circuit, logic circuit, processor, microprocessor, Central Processing Unit (CPU), Graphics Processing Unit (GPU), Digital Signal Processor (DSP), Field Programmable Gate Array (FPGA), integrated circuit, Application Specific Integrated Circuit (ASIC), etc., or any combination thereof. Any other kind of implementation of the respective functions which will be described below in further detail may also be understood as a "circuit". It is understood that any two (or more) of the circuits detailed herein may be realized as a single circuit with substantially equivalent functionality, and conversely that any single circuit detailed herein may be realized as two (or more) separate circuits with substantially equivalent functionality. Additionally, references to a "circuit" may refer to two or more circuits that collectively form a single circuit. The term "circuit arrangement" may refer to a single circuit, a collection of circuits, and/or an electronic device composed of one or more circuits.

As used herein, "memory" may be understood as a non-transitory computer-readable medium in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, etc., or any combination thereof. Furthermore, it is appreciated that registers, shift registers, processor registers, data buffers, etc., are also embraced herein by the term memory. It is appreciated that a single component referred to as "memory" or "a memory" may be composed of more than one different type of memory, and thus may refer to a collective component comprising one or more types of memory. It is readily understood that any single memory component may be separated into multiple collectively equivalent memory components, and vice versa. Furthermore, while memory may be depicted as separate from one or more other components (such as in the drawings), it is understood that memory may be integrated within another component, such as on a common integrated chip.

The term "terminal device" utilized herein refers to user-side devices (both mobile and immobile) that can connect to a core network and various external networks via a radio access network. The term "network access node" as utilized herein refers to a network-side device that provides a radio access network with which terminal devices can connect and exchange information with other networks through the network access node.

The term "base station" used in reference to an access point of a mobile communication network may be understood as a macro base station, micro base station, Node B, evolved NodeB (eNB), Home eNodeB, Remote Radio Head (RRH), relay point, etc. As used herein, a "cell" in the context of telecommunications may be understood as a sector served by a base station. Accordingly, a cell may be a set of geographically co-located antennas that correspond to a particular sectorization of a base station. A base station may thus serve one or more cells (or sectors), where each cell is characterized by a distinct communication channel. Furthermore, the term "cell" may be utilized to refer to any of a macrocell, microcell, femtocell, picocell, etc. The terms "user equipment", "UE", "mobile terminal", "user terminal", "terminal device", etc., may apply to any wireless communication device, including cellular phones, tablets, laptops, personal computers, wearables, multimedia playback and other handheld electronic devices, consumer/home/office/commercial appliances, vehicles, and any number of additional electronic devices capable of wireless communications.

Any of the radio links described herein may operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth(r), Wireless Gigabit Alliance (WiGig) standard, mmWave standards in general (wireless systems operating at 10-300 GHz and above such as WiGig, IEEE 802.11ad, IEEE 802.11ay, etc.), technologies operating above 300 GHz and THz bands, (3GPP/LTE based or IEEE 802.11p and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others, etc.

Aspects described herein can be used on various different types of spectrum, including dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies). Applicable spectrum bands include IMT (International Mobile Telecommunications) spectrum (including 450 - 470 MHz, 790 - 960 MHz, 1710 - 2025 MHz, 2110 - 2200 MHz, 2300 - 2400 MHz, 2500 - 2690 MHz, 698-790 MHz, 610 - 790 MHz, 3400 - 3600 MHz, etc.). Note that some bands are limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 71 - 76 GHz, 81 - 86 GHz and 92 - 94 GHz, etc.), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz - 71 GHz band, any band between 65.88 GHz and 71 GHz, bands currently allocated to automotive radar applications such as 76-81 GHz, and future bands including 94-300 GHz and above. Furthermore, the scheme can be used on a secondary basis on bands such as the TV White Space bands (typically below 790 MHz) where in particular the 400 MHz and 700 MHz bands are promising candidates. Besides cellular applications, specific applications for vertical markets may be addressed such as PMSE (Program Making and Special Events), medical, health, surgery, automotive, low-latency, drones, etc. applications.

Aspects described herein can also be applied to different Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

For purposes of this disclosure, radio communication technologies may be classified as one of a Short Range radio communication technology or Cellular Wide Area radio communication technology. Short Range radio communication technologies include Bluetooth, WLAN (e.g. according to any IEEE 802.11 standard), and other similar radio communication technologies. Cellular Wide Area radio communication technologies include Global System for Mobile Communications (GSM), Code Division Multiple Access 2000 (CDMA2000), Universal Mobile Telecommunications System (UMTS), Long Term Evolution (LTE), General Packet Radio Service (GPRS), Evolution-Data Optimized (EV-DO), Enhanced Data Rates for GSM Evolution (EDGE), High Speed Packet Access (HSPA; including High Speed Downlink Packet Access (HSDPA), High Speed Uplink Packet Access (HSUPA), HSDPA Plus (HSDPA+), and HSUPA Plus (HSUPA+)), Worldwide Interoperability for Microwave Access (WiMax) (e.g. according to an IEEE 802.16 radio communication standard, e.g. WiMax fixed or WiMax mobile), etc., and other similar radio communication technologies. Cellular Wide Area radio communication technologies also include "small cells" of such technologies, such as microcells, femtocells, and picocells. Cellular Wide Area radio communication technologies may be generally referred to herein as "cellular" communication technologies. It is understood that exemplary scenarios detailed herein are demonstrative in nature, and accordingly may be similarly applied to various other mobile communication technologies, both existing and not yet formulated, particularly in cases where such mobile communication technologies share similar features as disclosed regarding the following examples. Furthermore, as used herein the term GSM refers to both circuit- and packet-switched GSM, i.e. including GPRS, EDGE, and any other related GSM technologies. Likewise, the term UMTS refers to both circuit- and packet-switched GSM, i.e. including HSPA, HSDPA/HSUPA, HSDPA+/HSUPA+, and any other related UMTS technologies.

The term "network" as utilized herein, e.g. in reference to a communication network such as a radio communication network, encompasses both an access section of a network (e.g. a radio access network (RAN) section) and a core section of a network (e.g. a core network section). The term "radio idle mode" or "radio idle state" used herein in reference to a mobile terminal refers to a radio control state in which the mobile terminal is not allocated at least one dedicated communication channel of a mobile communication network. The term "radio connected mode" or "radio connected state" used in reference to a mobile terminal refers to a radio control state in which the mobile terminal is allocated at least one dedicated uplink communication channel of a mobile communication network.

Unless explicitly specified, the term "transmit" encompasses both direct (point-to-point) and indirect transmission (via one or more intermediary points). Similarly, the term "receive" encompasses both direct and indirect reception. The term "communicate" encompasses one or both of transmitting and receiving, i.e. unidirectional or bidirectional communication in one or both of the incoming and outgoing directions. The term "calculate" encompass both 'direct' calculations via a mathematical expression/formula/relationship and 'indirect' calculations via lookup or hash tables and other array indexing or searching operations.

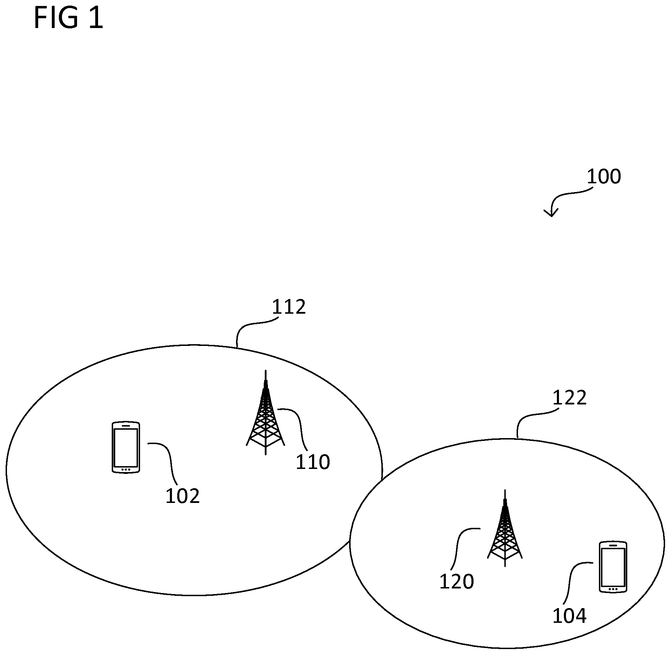

FIG. **1** shows communication network **100**, which may include terminal devices **102** and **104** in addition to network access nodes **110** and **120.** Communication network **100** may communicate via network access nodes **110** and **120** with terminal devices **102** and **104** via various mechanisms. In some aspects, communication network **100** may be an ad-hoc network, which may be self-organizing, i.e., the ad-hoc network may be composed of devices that are not pre-configured to have certain roles. A device may be an apparatus capable of communicating via the communication means of communication network **100.** Any device may independently become part of communication network **100**, such as via self-configuration and/or registration with our devices. Thus, in some aspects communication network **100** may not have a fixed set of devices. In some aspects, the ad-hoc network may be composed of heterogeneous devices or homogenous devices. Homogeneous devices may all have the same properties, such as computational power, communication rate, communication technologies, etc. Heterogeneous devices on the other hand, may have varying properties. Communications between devices in the ad-hoc network may be able to communicate directly to one another, e.g., peer-to-peer, or may be synchronized to forward communications via other devices to a targeted device, e.g., peer-to-remote.

The ad-hoc network may include a hierarchy or a system in which one or more devices, for example, network access nodes **110** and **120**, may direct other devices in communication network **100** to transmit communications. The hierarchy of devices may be based on computational power. For example, devices with a higher computational power than other devices may be assigned a higher hierarchy, and may thus direct the communications of lower hierarchy devices, such as to direct communication forwarding more efficiently.

In some aspects, communication network **100** can use a sound wave access network. Devices, e.g., network access nodes **110** and **120**, as well as terminal devices **102** and **104**, may utilize transducers, e.g., including a diaphragm, to convert electrical signals into physical sound waves that propagate through a medium, such as air. The sound waves may be in an ultrasonic frequency and may be modulated to convey communications between devices.

In some aspects, communication network **100** can use an optical access network. Devices, such as network access nodes **110** and **120** and/or terminal devices **102** and **104**, may utilize electromagnetic radiation in, for example, the visible light spectrum, infrared spectrum, and/or ultraviolet spectrum to convey communications between devices. Communications may be effected between a light source and a light-sensitive sensor.

In some aspects, communication network **100** can use a radio access network, which may hereon be referred to as radio communication network **100.** Although certain examples described herein may refer to a particular radio access network context (e.g., LTE, UMTS, GSM, other 3rd Generation Partnership Project (3GPP) networks, WLAN/WiFi, Bluetooth, 5G, mmWave, etc.), these examples are demonstrative and may therefore be analogously applied *mutatis mutandis* to any other type or configuration of radio access network. The number of network access nodes and terminal devices in radio communication network **100** is exemplary and is scalable to any amount.

In an exemplary cellular context, network access nodes **110** and **120** may be base stations (e.g., eNodeBs, NodeBs, Base Transceiver Stations (BTSs), or any other type of base station), while terminal devices **102** and **104** may be cellular terminal devices (e.g., Mobile Stations (MSs), User Equipments (UEs), or any type of cellular terminal device). Network access nodes **110** and **120** may therefore interface (e.g., via backhaul interfaces) with a cellular core network such as an Evolved Packet Core (EPC, for LTE), Core Network (CN, for UMTS), or other cellular core networks, which may also be considered part of radio communication network **100.** The cellular core network may interface with one or more external data networks. In an exemplary short-range context, network access node **110** and **120** may be access points (APs, e.g., WLAN or WiFi APs), while terminal device **102** and **104** may be short range terminal devices (e.g., stations (STAs)). Network access nodes **110** and **120** may interface (e.g., via an internal or external router) with one or more external data networks.

Network access nodes **110** and **120** (and, optionally, other network access nodes of radio communication network **100** not explicitly shown in FIG. **1**) may accordingly provide a radio access network to terminal devices **102** and **104** (and, optionally, other terminal devices of radio communication network **100** not explicitly shown in FIG. **1**). In an exemplary cellular context, the radio access network provided by network access nodes **110** and **120** may enable terminal devices **102** and **104** to wirelessly access the core network via radio communications. The core network may provide switching, routing, and transmission, for traffic data related to terminal devices **102** and **104**, and may further provide access to various internal data networks (e.g., control nodes, routing nodes that transfer information between other terminal devices on radio communication network **100**, etc.) and external data networks (e.g., data networks providing voice, text, multimedia (audio, video, image), and other Internet and application data). In an exemplary short-range context, the radio access network provided by network access nodes **110** and **120** may provide access to internal data networks (e.g., for transferring data between terminal devices connected to radio communication network **100**) and external data networks (e.g., data networks providing voice, text, multimedia (audio, video, image), and other Internet and application data).

The radio access network and core network (if applicable, e.g. for a cellular context) of radio communication network **100** may be governed by communication protocols that can vary depending on the specifics of radio communication network **100.** Such communication protocols may define the scheduling, formatting, and routing of both user and control data traffic through radio communication network **100**, which includes the transmission and reception of such data through both the radio access and core network domains of radio communication network **100.** Accordingly, terminal devices **102** and **104** and network access nodes **110** and **120** may follow the defined communication protocols to transmit and receive data over the radio access network domain of radio communication network **100**, while the core network may follow the defined communication protocols to route data within and outside of the core network. Exemplary communication protocols include LTE, UMTS, GSM, WiMAX, Bluetooth, WiFi, mmWave, etc., any of which may be applicable to radio communication network **100.**

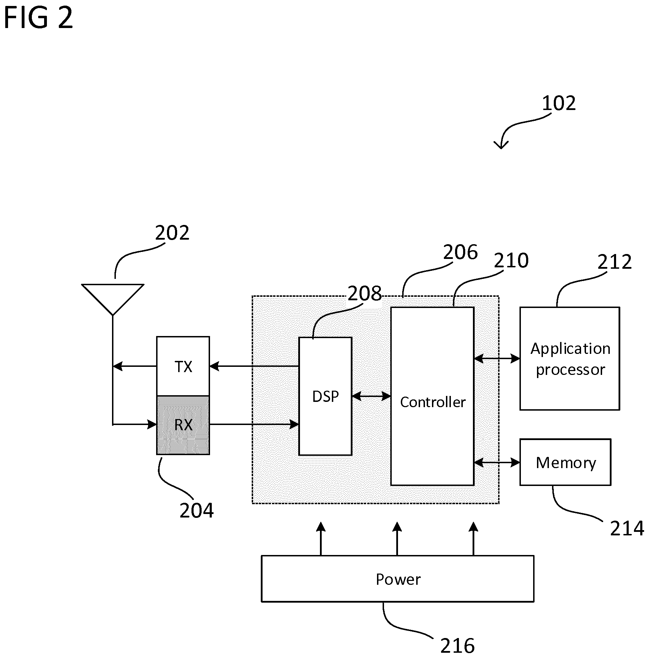

FIG. **2** shows an internal configuration of terminal device **102**, which may include antenna system **202**, radio frequency (RF) transceiver **204**, baseband modem **206** (including digital signal processing subsystem **208** and controller **210**), application processor **212**, memory **214**, and power supply **216.** Although not explicitly shown in FIG. **2**, terminal device **102** may include one or more additional hardware, software, and/or firmware components (such as processors/microprocessors, controllers/microcontrollers, other specialty or generic hardware/processors/circuits, etc.), peripheral device(s), memory, power supply, external device interface(s), subscriber identity module(s) (SIMs), user input/output devices (display(s), keypad(s), touchscreen(s), speaker(s), external button(s), camera(s), microphone(s), etc.), etc.

In an abridged operational overview, terminal device **102** may transmit and receive radio signals over one or more radio access networks. Baseband modem **206** may direct such communication functionality of terminal device **102** according to the communication protocols associated with each radio access network, and may execute control over antenna system **202** and RF transceiver **204** in order to transmit and receive radio signals according to the formatting and scheduling parameters defined by each communication protocol. Although various actual designs may include separate communication components for different supported radio access technologies (e.g., a separate antenna, RF transceiver, digital signal processing subsystem, and controller), for purposes of conciseness the configuration of terminal device **102** shown in FIG. **2** depicts only a single instance of each such components. Accordingly, in some aspects terminal device **102** may include separate antennas, RF transceivers, digital signal processing subsystem, and and/or controllers for different supported radio access technologies, such as a set of first generation (1G) components, a set of second generation (2G) component, a set of third generation (3G) components, a set of fourth generation (4G) component, etc., and/or a set of components for a first short-range radio technology (e.g., WiFi), a set of component for a second short-range radio technology (e.g., Bluetooth), and so forth.

Terminal device **102** may transmit and receive radio signals with antenna system **202**, which may include analog antenna combination and/or beamforming circuitry and may be a single antenna or an antenna array that includes multiple antennas and. In the receive path (RX), RF transceiver **204** may receive analog radio frequency signals from antenna system **202** and perform analog and digital RF front-end processing on the analog radio frequency signals to produce digital baseband samples (e.g., In-Phase/Quadrature (IQ) samples) to provide to baseband modem **206.** RF transceiver **204** may accordingly include analog and digital reception components including amplifiers (e.g., a Low Noise Amplifier (LNA)), filters, RF demodulators (e.g., an RF IQ demodulator)), and analog-to-digital converters (ADCs) to convert the received radio frequency signals to digital baseband samples. In the transmit path (TX), RF transceiver **204** may receive digital baseband samples from baseband modem **206** and perform analog and digital RF front-end processing on the digital baseband samples to produce analog radio frequency signals to provide to antenna system **202** for wireless transmission. RF transceiver **204** may thus include analog and digital transmission components including amplifiers (e.g., a Power Amplifier (PA), filters, RF modulators (e.g., an RF IQ modulator), and digital-to-analog converters (DACs) to mix the digital baseband samples received from baseband modem **206** to produce the analog radio frequency signals for wireless transmission by antenna system **202.** Baseband modem **206** may control the RF transmission and reception of RF transceiver **204**, which can include specifying the transmit and receive radio frequencies for operation of RF transceiver **204.** In some aspects, radio transceiver **204** may be a software-defined radio (SDR) component implemented as a processor configured to execute software-defined instructions that specify radio frequency processing routines

As shown in FIG. **2**, baseband modem **206** may include digital signal processing subsystem **208**, which may perform physical layer (PHY; Layer 1) transmission and reception processing to prepare outgoing transmit data provided by controller **210** for transmission via RF transceiver **204** and prepare incoming received data provided by RF transceiver **204** for processing by controller **210.** Digital signal processing subsystem **210** may accordingly perform one or more of error detection, forward error correction encoding/decoding, channel coding and interleaving, physical channel modulation/demodulation, physical channel mapping, radio measurement and search, frequency and time synchronization, antenna diversity processing, power control and weighting, rate matching, retransmission processing, etc. Digital signal processing subsystem **208** may be structurally realized as hardware (e.g., as one or more digitally-configured hardware circuits, such as ASICs or FPGAs), as software (e.g., one or more processors configured to retrieve and execute program code that defines arithmetic, control, and/or I/O instructions and is stored in a non-transitory computer-readable storage medium), or as a mixed combination of hardware and software. Although not explicitly shown in FIG. **2**, digital signal processing subsystem **208** may include a controller configured to control the various hardware and software processing components of digital signal processing subsystem **208** in accordance with physical layer control logic defined by the communications protocol for the relevant radio access technologies. In some aspects, in addition to a controller digital signal processing subsystem **208** may include one or more digitally-configured hardware circuits that are individually configured to perform a particular processing function. The controller may therefore distribute processing tasks to the one or more digitally configured hardware circuits, which may perform their assigned processing function on input data and provide the controller with the resulting output data. Furthermore, while digital signal processing subsystem **208** is depicted as a single component in FIG. **2**, digital signal processing subsystem **208** may be collectively implemented as separate sections of physical layer processing components where each respective section is dedicated to, for example, the physical layer processing of a particular radio access technology.

Terminal device **102** may be configured to operate according to one or more radio access technologies, which may be directed by controller **210.** Controller **210** may thus be responsible for controlling the radio communication components of terminal device **102** (antenna system **202**, RF transceiver **204**, and digital signal processing subsystem **208**) in accordance with the communication protocols of each supported radio access technology, and accordingly may represent the Access Stratum and Non-Access Stratum (NAS) (also encompassing Layer 2 and Layer 3) of each supported radio access technology. Controller **210** may be structurally embodied as a protocol processor configured to execute protocol software (retrieved from a controller memory) and subsequently control the radio communication components of terminal device **102** in order to transmit and receive communication signals in accordance with the corresponding protocol control logic defined in the protocol software.

Controller **210** may therefore be configured to manage the radio communication functionality of terminal device **102** in order to communicate with the various radio access and core network components of radio communication network **100**, and accordingly may be configured according to the communication protocols for multiple radio access technologies. In some aspects, controller **210** may be a unified controller that is collectively responsible for all supported radio access technologies, while in other aspects controller **210** may include multiple separate controllers where each controller is a dedicated controller for a particular radio access technology or group of technologies, such as a dedicated controller for a first radio access technology and a dedicated controller for a second radio access technology. Regardless, controller **210** may be responsible for directing radio communication activity of terminal device **102** according to the communication protocols of the supported radio access technologies. As previously noted regarding digital signal processing subsystem **208**, one or both of antenna system **202** and RF transceiver **204** may similarly be partitioned into multiple dedicated component sets that each respectively correspond to one or more of the supported radio access technologies. Depending on the specifics of each such configuration and the number of supported radio access technologies, controller **210** may be configured to control the radio communication operations of terminal device **102** in accordance with, for example, a master/slave RAT hierarchical or multi-SIM scheme.

Terminal device **102** may also include application processor **212**, memory **214**, and power supply **212.** In some aspects, application processor **212** may be a CPU configured to execute various applications and/or programs of terminal device **102** at an application layer of terminal device **102**, such as an operating system (OS), a user interface (UI) for supporting user interaction with terminal device **102**, and/or various user application programs. The application processor may interface with baseband modem **206** as an application layer to transmit and receive user data such as voice data, audio/video/image data, messaging data, application data, basic Internet/web access data, etc., over the radio network connection(s) provided by baseband modem **206.**

Memory **214** may be a memory component of terminal device **102**, such as a hard drive or another such permanent memory device. Although not explicitly depicted in FIG. **2**, in some aspects the various other components of terminal device **102** shown in FIG. **2** may additionally each include integrated permanent and non-permanent memory components, such as for storing software program code, buffering data, holding current state information, etc.

Power supply **216** may be an electrical power source that provides power to the various electrical components of terminal device **102.** Depending on the design of terminal device **102**, power supply **216** may be a 'definite' power source such as a battery (rechargeable or disposable) or an 'indefinite' power source such as a wired electrical connection. Operation of the various components of terminal device **102** may thus pull electrical power from power supply **216.**

Terminal devices **102** and **102** may execute mobility procedures to connect to, disconnect from, and switch between available network access nodes of the radio access network of radio communication network **100.** As individual network access nodes of radio communication network **100** may have a specific coverage area, terminal devices **102** and **102** may be configured to select and re-select between the available network access nodes in order to maintain a suitable radio access connection with the radio access network of radio communication network **100.** For example, terminal device **102** may establish a radio access connection with network access node **110** while terminal device **102** may establish a radio access connection with network access node **120.** In the event that the current radio access connection degrades, terminal devices **102** or **102** may seek a new radio access connection with another network access node of radio communication network **100.** For example, terminal device **102** may move from the coverage area **122** of network access node **120** into the coverage area **112** of network access node **110.** As a result, the radio access connection with network access node **120** may degrade, which terminal device **102** may detect via radio measurements (e.g., signal strength or signal quality measurements) of network access node **120.** Depending on the mobility procedures defined in the appropriate communication protocols for radio communication network **100**, terminal device **102** may seek a new radio access connection (which may be triggered at terminal device **102** or by the radio access network), such as by performing radio measurements on neighboring network access nodes to determine whether any neighboring network access nodes can provide a suitable radio access connection. As terminal device **102** may have moved into the coverage area **112** of network access node **110**, terminal device **102** may identify network access node **110** (which may be selected by terminal device **102** or selected by the radio access network) and transfer to a new radio access connection with network access node **110.** Such mobility procedures, including radio measurements, cell selection/reselection, and handover are established in the various communication protocols and may be employed by terminal devices and the radio access network in order to maintain strong radio access connections between each terminal device and the radio access network across any number of different radio access network scenarios.

Although reference may be made in the following description to terminal device **102**, e.g., that terminal device **102** may receive a transmission, the same may apply to the relevant components of terminal device **104** that may perform the described function, e.g., the receiver may receive the transmission.

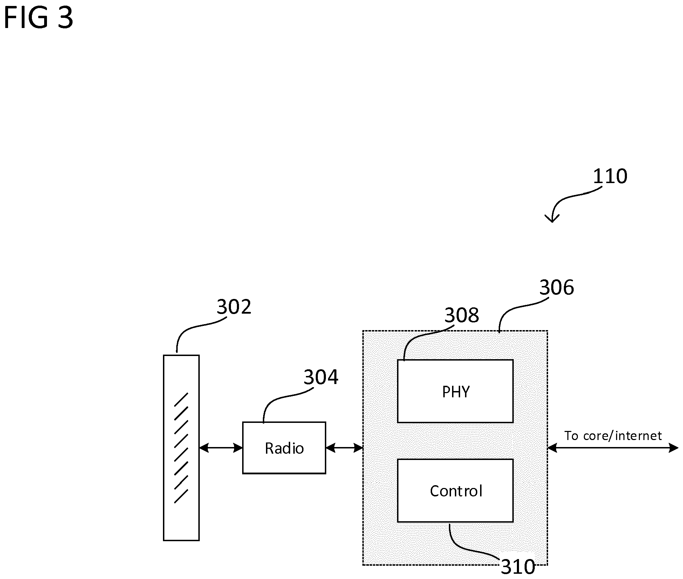

FIG. **3** shows an internal configuration of a network access node such as network access node **110.** As shown in FIG. **3**, network access node **110** may include antenna system **302**, radio transceiver subsystem **304**, and communication subsystem **306** (including physical layer subsystem **308** and controller **310**). In an abridged overview of the operation of network access node **110**, network access node **110** may transmit and receive radio signals via antenna system **302**, which may be an antenna array including multiple antennas. Radio transceiver subsystem **304** may perform transmit and receive RF processing to convert outgoing digital data from communication subsystem **306** into analog RF signals to provide to antenna system **302** for radio transmission and to convert incoming analog RF signals received from antenna system **302** into digital data to provide to communication subsystem **306.** Physical layer subsystem **308** may be configured to perform transmit and receive PHY processing on digital data received from radio transceiver subsystem **304** to provide to controller **110** and on digital data received from controller **310** to provide to radio transceiver subsystem **304.** Controller **310** may control the communication functionality of network access node **110** according to the corresponding communication protocols, e.g., LTE, which may include exercising control over antenna system **302**, radio transceiver subsystem **304**, and physical layer subsystem **308.** Each of radio transceiver subsystem **304**, physical layer subsystem **308**, and controller 310 may be structurally realized as hardware (e.g., as one or more digitally-configured hardware circuits, such as ASICs or FPGAs), as software (e.g., one or more processors configured to retrieve and execute program code that defines arithmetic, control, and/or I/O instructions and is stored in a non-transitory computer-readable storage medium), or as a mixed combination of hardware and software. In some aspects, radio transceiver subsystem **304** may be a radio transceiver including digital and analog radio frequency processing and amplification circuitry. In some aspects, radio transceiver subsystem **304** may be a software-defined radio (SDR) component implemented as a processor configured to execute software-defined instructions that specify radio frequency processing routines. In some aspects, physical layer subsystem **308** may include a controller and one or more hardware accelerators, wherein the controller is configured to control physical layer processing and offload certain processing tasks to the one or more hardware accelerators. In some aspects, controller **310** may be a controller configured to execute software-defined instructions that specify upper-layer control functions. In some aspects, controller **310** may be limited to radio communication protocol stack layer functions, while in other aspects controller **310** may also be responsible for transport, internet, and application layer functions.

Network access node **110** may thus provide the functionality of network access nodes in radio communication networks by providing a radio access network to enable served terminal devices to access desired communication data. For example, network access node **110** may also interface with a core network, one or more other network access nodes, or various other internet networks and servers via a wired or wireless backhaul interface.

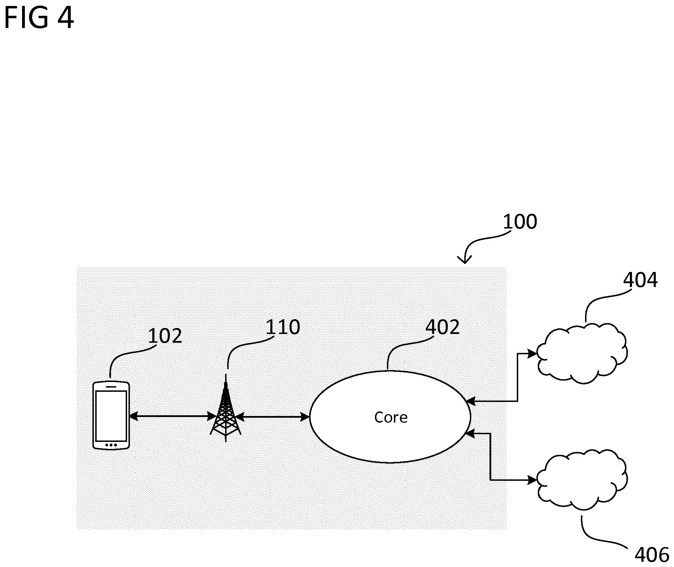

As previously indicated, network access nodes **110** and **112** may interface with a core network. FIG. **4** shows an exemplary configuration in accordance with some aspects where network access node **110** interfaces with core network **402**, which may be a cellular core network. Core network **402** may provide a variety of functions essential to operation of radio communication network **100**, such as data routing, authenticating and managing users/subscribers, interfacing with external networks, and various network control tasks. Core network **402** may therefore provide an infrastructure to route data between terminal device **104** and various external networks such as data network **404** and data network **406.** Terminal device **104** may thus rely on the radio access network provided by network access node **110** to wirelessly transmit and receive data with network access node **110,** which may then provide the data to core network **402** for further routing to external locations such as data networks **404** and **406** (which may be packet data networks (PDNs)). Terminal device **104** may therefore establish a data connection with data network **404** and/or data network **406** that relies on network access node **110** and core network **402** for data transfer and routing.

Radio communications between terminal devices and network access nodes may be executed according to standardized communication protocols that are specific to the utilized radio access technology. As previously described regarding the functionalities of baseband modem **206** of terminal device **102** and communication subsystem **306** of network access node **110**, these communication protocols may govern parameters such as signal formatting, transmission and reception scheduling, spectrum/bandwidth allocation, channel selection, mobility, connection management, and various higher-level control functionalities.

Modulation and demodulation may be an important component of signal formatting protocols related to the physical (PHY) layer, where many radio communication protocols may utilize constellation-based modulation schemes such as Quadrature Amplitude Modulation (QAM). In particular, a transmitter may generate a stream of digital data (e.g., a sequence of '1's and '0s') to be transmitted to a counterpart receiver. The transmitter may then partition the stream of digital data into separate blocks, map each block of digital data to one of a plurality of predefined modulation symbols to obtain a modulation symbol, mix the modulation symbol onto an RF carrier, and then wirelessly transmit the resulting RF data to the receiver. Following RF down-conversion, the receiver may perform a demapping operation on the received modulation symbols to recover the original data bits for each modulation symbol, thus obtaining the original stream of digital data.

The number of predefined modulation symbols of the modulation scheme is directly proportional to the supported data rate. For example, higher numbers of modulation symbols (i.e. a higher modulation order) in a given modulation scheme will enable higher numbers of bits to be transmitted with each modulation symbol. In the exemplary case of QAM, *N* bits can be transmitted with each of 2*^{N}* total QAM symbols, where e.g. 2^{(*N*=2)} = 4 modulation symbols represents two bits per symbol, 2^{(*N*=4)} = 16 represents four bits per symbol, and so forth.

While increasing the number of modulation symbols, or increasing the modulation 'order', can thus increase the data rate by encoding more bits into each symbol, higher order modulation schemes can also be more susceptible to noise and interference. In particular, when plotting modulation symbols as point on the IQ plane, higher numbers of modulation symbols will result in a higher density of points, or in other words, the modulation symbols will be located closer to each other on the IQ plane. On account of this increased density of modulation symbols and resulting reduced distance between the modulation symbols, smaller errors caused by noise and interference can lead to misidentification of received modulation symbols when performing demodulation (e.g., when attempting to determine which predefined modulation symbol each received modulation symbol originally corresponded to).

According to various aspects of this disclosure, spatial modulation solutions may enable higher data rates while avoiding some of these drawbacks associated with higher order modulation systems. In particular, aspects described herein may utilize 3D modulation with beam-hopping in which additional data can be encoded by virtue of which out a of a predefined set of transmitters performs transmission of the data. For example, in addition to a standard modulation symbol (e.g., a QAM-2*^{N}* symbol representing *N* bits), additional data can be encoded into a transmission stream by selecting a particular transmitter from the predefined set that represents the additional data. A receiver can then recover the standard modulation symbol via demodulation and identify which transmitter of the predefined set transmitted the received data, and in doing so can recover the entirety of the transmitted data. This can therefore increase the data rate without increasing the modulation order of the standard modulation symbol, and can as a result avoid the increased susceptibility to noise of higher-order modulation schemes.

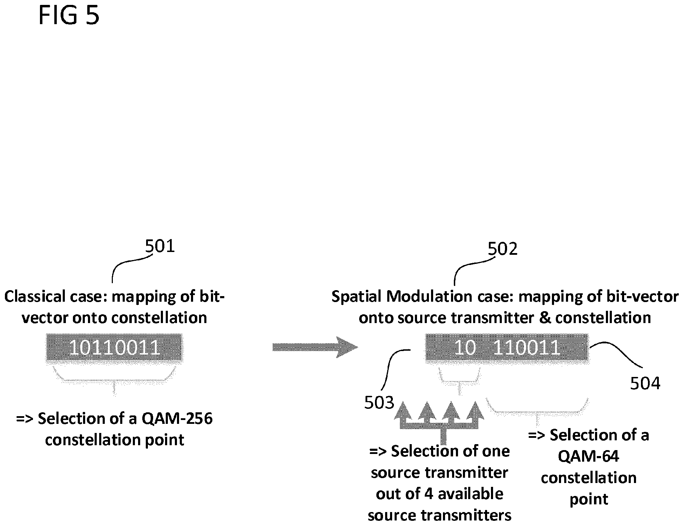

FIG. **5** shows exemplary diagrams **501** and **502** illustrating 3D modulation with beam-hopping according to some aspects. As shown in diagram **501**, a transmit bit vector may be used to select a modulation symbol according to, for example, a QAM-256 (quadrature amplitude modulation) constellation, where each modulation symbol may uniquely correspond to an 8-bit vector. Here, the transmit bit vector is "10110011", which corresponds to a modulation symbol in a QAM-256 scheme. During transmission, a transmitter may map the transmit bit vector "10110011" to the appropriate modulation symbol in the QAM-constellation, and may then transmit the modulation symbol as a wireless RF signal.

In contrast to the standard mapping and transmission of diagram **501**, diagram **501** shows mapping and transmission according to 3D modulation with beam-hopping. As shown in diagram **502**, the transmit bit vector "10110011" can be divided into two component bit vectors. Component bit vector **503** equal to "10" corresponds to a transmitter index for a specific transmitter of a set of predefined transmitters, while component bit vector **504** is composed of the remaining bits "110011" of the transmit bit vector. Instead of mapping the entire 8 bits of the transmit bit vector to a QAM modulation symbol, the transmit bit vector of diagram **501** can be transmitted by a) selecting the transmitter out of the predefined set of transmitters that is assigned a transmit index equal to component bit vector **503** (e.g., "10") as the source transmitter, and b) mapping and transmitting the component bit vector **504** (e.g., 110011") with the selected source transmitter. Accordingly, the data of component bit vector **503** will be encoded by virtue of which of the predefined set of transmitters is the source transmitter (i.e., which performs the transmission), while the data of component bit vector **504** can be encoded and transmitted as a standard modulation symbol. Since the number of bits transmitted as a standard modulation symbol is less in diagram **502** compared to diagram **501** (e.g., 6 bits in diagram **502** compared to 8 bits in diagram **501**), performance can be improved, namely in the form of increases in signal-to-noise ratio (SNR) due to the reduced noise sensitivity. Furthermore, since the amount of data transmitted with each modulation symbol is kept the same (as the remaining bits are encoded in the form of the transmitter index), the data rate can also remain unchanged.

While the source transmitter may map and transmit the modulation symbol component vector, i.e. component bit vector **503**, according to standard modulation techniques, various 3D modulation with beam-hopping aspects may utilize a specific configuration to encode the transmitter index component vector, i.e. component bit vector **504.** In particular, these aspects may utilize a predefined assignment of transmit indices to each of a predefined set of transmitters. For example, the example described above with a length-2 transmitter index component vector may have a predefined set of at least four transmitters, where the possible two-bit transmit indices "00", "01", "10", and "11" may each be assigned to a respective one of the four transmitters. Accordingly, once each 8-bit transmit bit vector is ready for transmission, the transmitter index component vector composed of the first two bits can be identified, and the transmitter having a transmitter index that matches the transmitter index component vector can be selected as the source transmitter to transmit the modulation symbol component vector as a modulation symbol. The counterpart receiver can then demodulate the received modulation symbol via a demodulation operation to recover the modulation symbol component vector, and then identify which of the predefined set of transmitters was the source transmitter. As the transmitter indices assigned to each of the predefined set of transmitters is known at both the transmitters and the receiver, the receiver can then determine the transmitter index component vector as the transmitter index of the source transmitter. This process can then be repeated for subsequent transmit bit vectors, where each bit vector can result in a different transmitter (on account of differing transmitter index component vectors) and/or a different modulation symbol (on account of differing modulation symbol component vectors). As the transmitter may therefore change, or 'hop', on a per-modulated symbol basis while at least some of the transmitted data is encoded on the basis of spatial differences between the potential transmitters, this can be referred to as 3D modulation with beam-hopping.

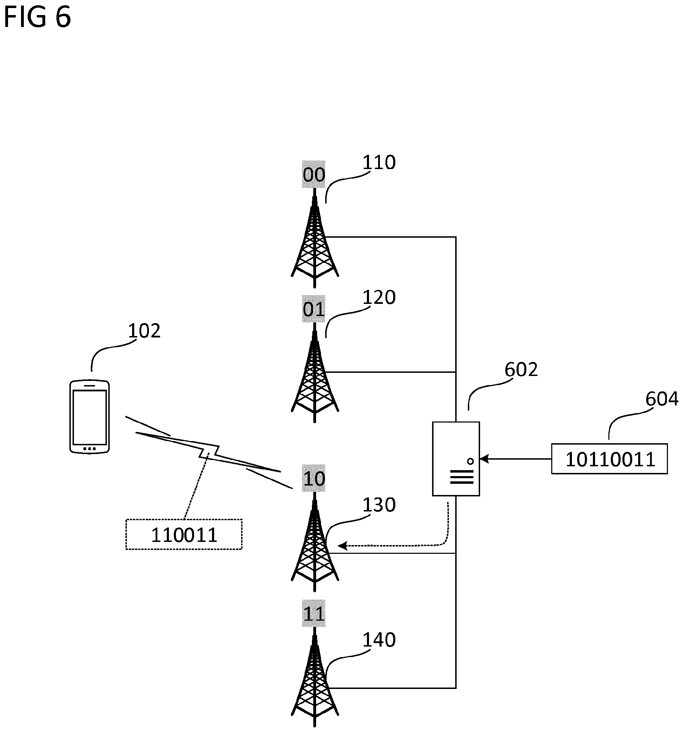

FIG. **6** shows an exemplary diagram illustrating 3D modulation with beam-hopping according to some aspects. As shown in FIG. **6**, terminal device **102** may be located in proximity (e.g., within the coverage area and/or within range) of multiple network access noes **110**, **120**, **130**, and **140.** In some aspects, network access nodes **110-140** may be macrocell network access nodes, and therefore may have a large coverage area in order of kilometers. In some aspects, network access nodes **110-140** may be microcell network access nodes, or 'small cells', and may have coverage areas in the order of tens or hundreds of meters. In some aspects, network access nodes **110-140** may include both macrocell and microcell network access nodes. While the example of FIG. **6** shows four network access nodes **110-140**, the number of network access nodes is scalable to any number, where the number of bits in the transmitter index component vector will scale accordingly. However, as the number of bits represented by the transmitter index component vector for *M* transmitters is given as 2*^{M}*, quantities of transmitters equal to a power of two may be advantageous in certain aspects.

Network access nodes **110-140** may form the predefined set of transmitters for the 3D modulation with beam-hopping scheme. Accordingly, given *M* = 4 transmitters in the exemplary context of FIG. **6**, the 3D modulation with beam-hopping scheme may be able to represent log₂ *M* = 2 bits into the transmitter index component vector that is encoded by virtue of which of network access nodes **110-140** transmits the modulation symbol component vector, i.e. which of network access nodes **110-140** is the source transmitter. As denoted in FIG. **6**, each of network access nodes **110-140** can thus be assigned a 2-bit transmitter index, where, for example, network access node **110** has transmitter index "00", network access node **120** has transmitter index "01", network access node **130** has transmitter index "10", and network access node **140** has transmitter index "11". This exemplary transmitter index scheme can be scaled to other values for the number of transmitters/size of the predefined set *M* and other lengths for the transmitter index component vector/transmitter index log₂ *M*. Non-limiting examples can include *M* = 8 transmitters and 3-bit transmitter index component vectors/transmitter indices, *M* = 16 transmitters and 4-bit transmitter index component vectors/transmitter indices, and so forth. Higher values of *M* may reduce the order of the modulation scheme used to transmit the modulation symbol component vector (and thus improve SNR); however, there may only be a limited number of transmitters available that can only satisfy certain values for *M*, such as where only a limited number of network access nodes are within range and/or where only a limited number of network access nodes can be effectively differentiated from each other to identify source transmitters.

During operation of the 3D modulation with beam-hopping scheme, controller **602** may receive a transmit bit vector **604** that is scheduled for transmission to terminal device **102**, where transmit bit vector **604** is "10110011" in the exemplary context of FIG. **6****.** Controller **602** may then split transmit bit vector **604** into a transmitter index component vector and a modulation symbol component vector. For example, controller **602** may take the leading two bits (according to *M* = 4) of transmit bit vector **604** as the transmitter index component vector and the remaining six bits of transmit bit vector **604** as the modulation symbol component vector. However, this component vector allocation scheme used to split the transmit bit vector into a transmitter index component vector and modulation symbol component vector is exemplary, and other component vector allocation schemes (e.g., that map bits at different positions of the transmit bit vector to the transmitter index component vector and modulation symbol component vector) can equivalently be used.

As shown in FIG. **6**, controller **602** may split transmit bit vector **604** into a transmitter index component vector "10" (for *M* = 4) and a modulation symbol component vector "110011". Controller **602** may then identify which of the predefined set of transmitters (e.g., which of network access nodes **110-140**), is assigned a transmitter index equal to the transmitter index component vector "10", and may then select the identified transmitter as the source transmitter for transmitting the modulation symbol component vector. Accordingly, controller **602** may identify network access node **130** as the source transmitter, and may then provide the modulation symbol component vector "110011" to network access node **130** for transmission, which network access node **130** may then map to a modulation symbol and subsequently transmit to terminal device **102** as a wireless RF signal. As the modulation symbol component vector has size *N* = 6 according to *M* = 4, network access node **130** may utilize a QAM-64 (according to 2^{*N*=6}) modulation scheme to map the modulation symbol component vector onto a QAM modulation symbol.

Terminal device **102** may then receive and process the wireless RF signal from network access node **130** to recover the modulation symbol and the corresponding modulation symbol component vector "110011". In order to recover the entire transmit bit vector, terminal device **102** may then determine which of network access nodes **110-140** transmitted the modulation symbol (as any of the predefined set of transmitters can transmit any given data modulation symbol). For example, terminal device **102** may identify that network access node **130** transmitted the modulation symbol, and, as the transmitter indices for network access nodes **110-140** are also known at terminal device **102**, may determine that the transmitter index component vector is equal to transmitter index "10" of network access node **130.** Terminal device **102** may thus have both the transmitter index component vector "10" (by virtue of identifying network access node **130** as the transmitter) and the modulated symbol component vector "110011" (by virtue of demodulating the modulation symbol), and may then combine the transmitter index component vector "10" and the modulated symbol component vector "110011" to recover the entire transmit bit vector "10110011".

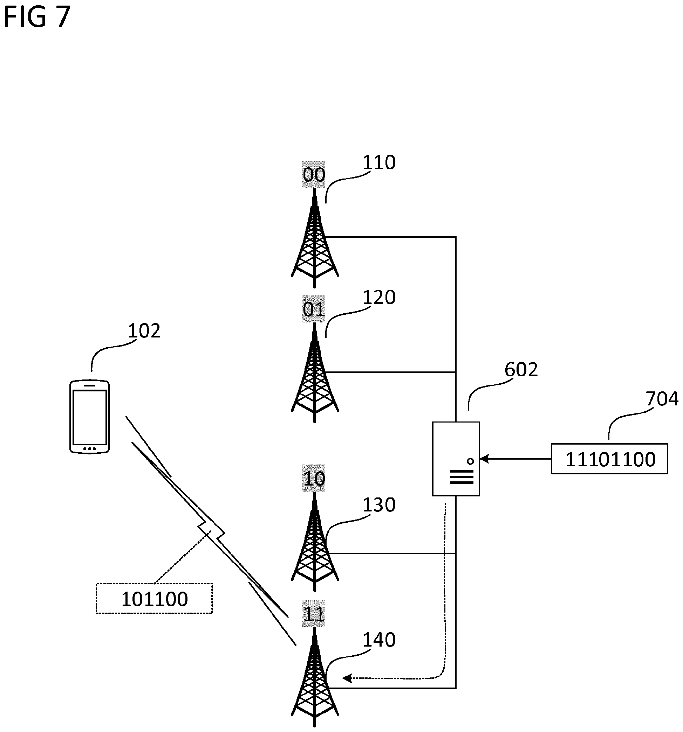

Network access nodes **110-140** may then alternate between transmitting modulation symbol component vectors for a sequence of transmit bit vectors dependent on the transmitter index component vector for each. As shown in FIG. **7**, controller **602** may receive another transmit bit vector **704** equal to "11101100". Using the exemplary component vector allocation scheme demonstrated above, controller **602** may split transmit bit vector **704** into the transmitter index component vector "11" and the modulation symbol component vector "101100". Controller **602** may then determine which of network access nodes **110-140** has a transmitter index equal to the transmitter index component vector "11" and identify network access node **140.** Controller **602** may then provide the modulation symbol component vector "101100" to network access node **140**, which network access node **140** may process to obtain a modulation symbol and transmit the modulation symbol to terminal device **102** as a wireless RF signal. Terminal device **102** may receive the wireless RF signal and demodulate the modulation symbol to obtain the modulation symbol component vector "101100", and may then determine that network access node **140** transmitted the modulation symbol to obtain the transmitter index component vector "11". Terminal device **102** may then recombine the transmitter index component vector "11" and the modulation symbol component vector "101100" to obtain the transmit bit vector "11101100".

Accordingly, source transmitter (out of network access nodes **110-140**) may switch, or 'hop', on a per-transmit bit vector basis depending on the transmitter index component vector of each transmit bit vector. As one or more bits of the transmit vector can be encoded by way of the transmitter index of the transmitting network access node, this can reduce the modulation order without reducing the data rate and as a result improve SNR and reception performance. While exemplified above for reducing QAM-256 into QAM-64, this description is demonstrative and can be scaled to any suitable modulation order that scales according to the number of bits in the transmitter index component vector and the modulation symbol component vector. Furthermore, while described above for a single stream case (i.e. with a one-dimensional stream of transmit bit vectors), these aspects can also be applied to multicarrier schemes where a different symbol is transmitted on each of a plurality of subcarriers during each symbol period. Accordingly, during a given symbol period, the symbol on each subcarrier is transmitted according to the transmitter index component vector of the corresponding transmit bit vector.

On the receive side of 3D modulation with beam-hopping, terminal device **102** may demodulate a received modulation symbol to determine the modulation symbol component vector and identify which of network access nodes **110-140** transmitted the modulation symbol to determine the transmitter index component vector. However, determining which of the predefined set of transmitters was the source transmitter for each received modulation symbol may in some cases be a relatively complex procedure.

According to aspects of this disclosure, terminal device **102** may utilize special processing techniques to lower the complexity of this receive operation. In particular, terminal device **102** may utilize a spectrum envelope-based comparison in order to narrow down the possibilities for which of the predefined set of transmitters is the source transmitter. Terminal device **102** may then demodulate the received modulation symbol using a resulting set of source transmitter candidates (as opposed to the full predefined set of transmitters), and, due to the smaller number of possible source transmitters, may reduce the processing complexity of the demodulation operation.

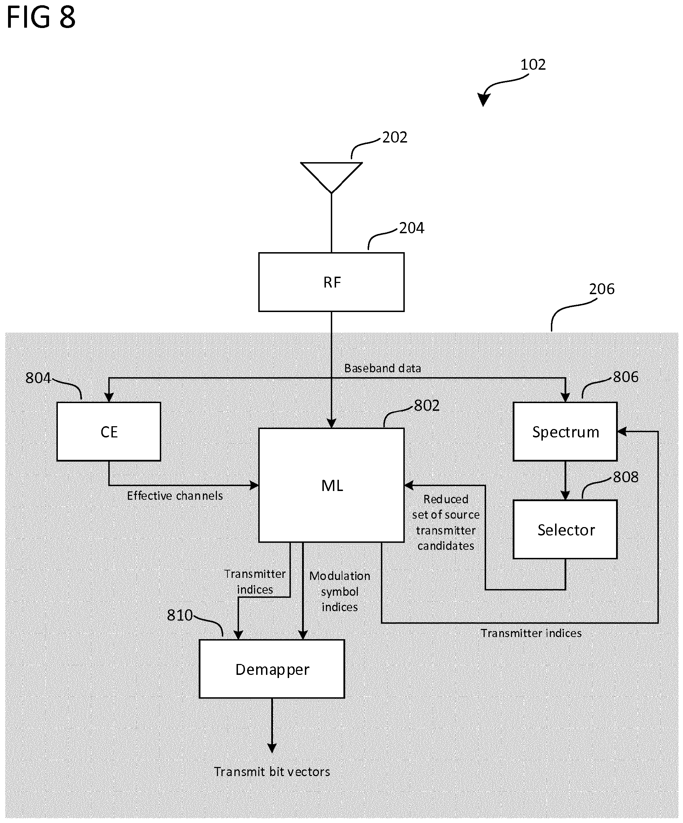

For example, in the exemplary context of FIGs. **7** and **8**, any one of network access nodes **110-140** (the predefined set of transmitters) could be the source transmitter for a given received modulation symbol. Instead of demodulating the received modulation symbol under the assumption that any one of the predefined set of transmitters was the source transmitter, terminal device **102** may perform preliminary processing to eliminate one or more of network access nodes **110-140** (the predefined set of transmitters) from contention as the source transmitter, and can thus obtain a set of source transmitter candidates. Terminal device **102** can then demodulate the received modulation symbol while considering only the set of source transmitter candidates as candidates for the source transmitter. As terminal device **102** considers fewer transmitters as the source transmitter, terminal device **102** can reduce the complexity of the demodulation operation.

The demodulation operation for recovering both the transmitter index component vector and the modulation symbol component vector from a received modulation symbol can be a complex process. For example, in some aspects terminal device **102** can utilize a maximum likelihood (ML) detector to demodulate a received modulation symbol. In ML detection for single transmitter cases (e.g., where a fixed serving network access node transmits each modulation symbol), a demodulator of terminal device **102** can, for a received modulation symbol, test each possible modulation symbol (e.g., 64 total for QAM-64, 256 total for QAM-256, etc.) to determine which out of all of the possible modulation symbols presents the 'maximum likelihood' of being the transmitted modulation symbol. Accordingly, for QAM-64, the demodulator can test each of the 64 QAM symbols to determine which has the highest likelihood of being the transmitted modulation symbol corresponding to the received modulation symbol.

While the received modulation symbol has been altered by channel and noise effects, the demodulator can generally use an estimate of the channel, known as an 'effective channel' to compensate for such channel effects during demodulation. Even though some noise effects, in addition to any leftover residue from errors in the channel estimation, will remain in the channel-corrected modulation symbol, the demodulator can generally still determine which of the possible modulation symbols was 'most likely' the transmitted modulation symbol when using ML detection.

However, the effective channel used by an ML detector is the effective channel for the single, fixed transmitter, which remains constant over a series of received modulation symbols. This use of effective channels in ML detection is therefore complicated in the 3D modulation with beam hopping case, as any one of the predefined set of transmitters could have transmitted the modulation symbol, thus also meaning that the effective channel for the received modulation symbol could have been the effective channel for any of the predefined set of transmitters. Accordingly, instead of trying out, for example, 64 possible modulation symbols with a single effective channel for demodulation for QAM-64, the ML detector will try out 64 possible modulation symbols for each of the *M* possible effective channels. This results in a significant complexity increase, where the demodulator will check 2*^{N}M* candidates total (for the 2*^{N}* possible modulation symbols and *M* possible transmitters).

Aspects of this disclosure can reduce the demodulation complexity by narrowing down the predefined set of transmitters to a set of source transmitter candidates that are considered as candidates for the source transmitter during ML detection. For example, if terminal device **102** can reduce the predefined set of *M* transmitters to a reduced set of *L* transmitters (where *L* < *M*), terminal device **102** can reduce the complexity of the demodulation operation, as the ML detector will only test *L* effective channels instead of *M* effective channels. This can speed up demodulation and/or reduce the amount of processing resources used for demodulation.

In particular, various aspects of this disclosure may use a filtering scheme based on spectrum envelope comparison to narrow down the possible source transmitters into a set of source transmitter candidates, i.e., to reduce the predefined set of *M* transmitters to a reduced set of *L* transmitters that are considered as candidates for the source transmitter for a given received modulation symbol. These aspects can then perform ML detection on the set of source transmitter candidates to recover the original transmit bit vector.

FIG. **8** shows an exemplary internal configuration of terminal device **102** related to demodulation according to some aspects of 3D modulation with beam-hopping. As the illustrated depiction of FIG. **8** is focused on demodulation, for purposes of conciseness FIG. **8** may not expressly show certain other components of terminal device **102.** As shown in FIG. **8**, in some aspects baseband modem **206** of terminal device **102** may include ML detector **802,** channel estimator (CE) **804**, spectrum analyzer **806**, selector **808**, and demapper **810**. Each of ML detector **802**, channel estimator (CE) **804**, spectrum analyzer **806**, selector **808**, and demapper **810** may be structurally realized as hardware (e.g., as one or more digitally-configured hardware circuits, such as ASICs, FPGAs, or another type of dedicated hardware circuit), as software (e.g., one or more processors configured to retrieve and execute program code that defines arithmetic, control, and/or I/O instructions and is stored in a non-transitory computer-readable storage medium), or as a mixed combination of hardware and software. While ML detector **802**, channel estimator **804**, spectrum analyzer **806**, selector **808**, and demapper **810** are shown separately in FIG. **8**, this depiction generally serves to highlight the operation of baseband modem **206** on a functional level. ML detector **802**, channel estimator **804**, spectrum analyzer **806**, selector **808**, and demapper **810** can therefore each be implemented as separate hardware and/or software components, or one or more of ML detector **802**, channel estimator **804**, spectrum analyzer **806**, selector **808**, and demapper **810** can be combined into a unified hardware and/or software component (for example, a hardware-defined circuitry arrangement including circuitry to perform multiple functions, or a processor configured to execute program code that defines instructions for multiple functions).

As will be described, in some aspects terminal device **102** may be configured to utilize a spectrum envelope-based analysis to pre-process modulation symbols to identify a set of source transmitter candidates for consideration as source transmitter candidates to perform ML demodulation. In particular, terminal device **102** may derive a spectrum envelope for each of the predefined set of transmitters from a first set of resource units, and may then derive spectrum envelopes from a second set of resource units. Terminal device **102** may then compare each spectrum envelope from the second set of resource units to the spectrum envelopes for the predefined set of transmitters to see if there are any matching spectrum envelopes. Terminal device **102** may then, for each resource unit in the second set of resource units, narrow down the source transmitter candidates and accordingly narrow down the effective channels that are tested during ML detection.

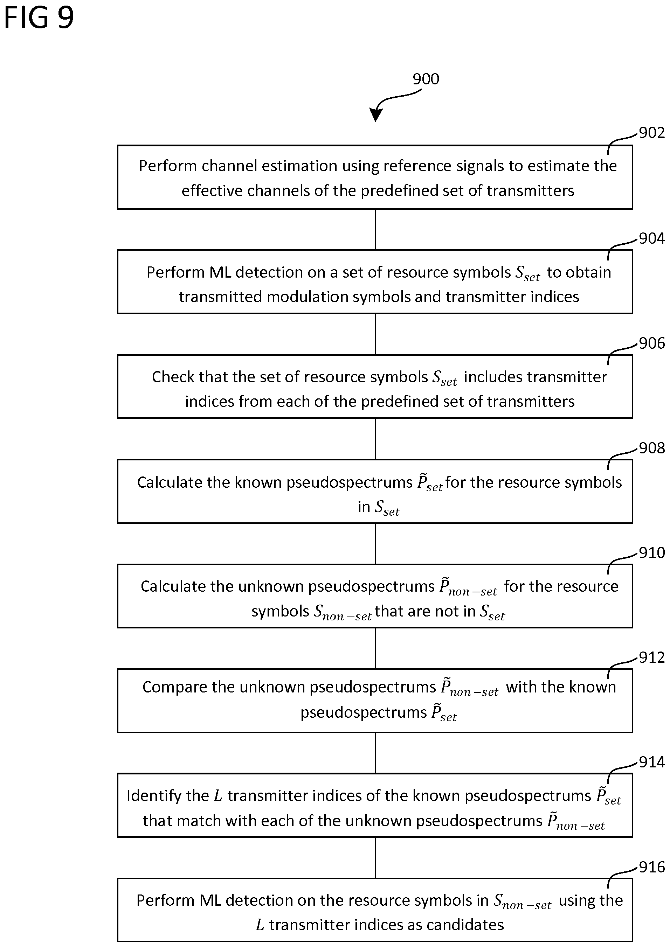

FIG. **9** shows exemplary method **900**, which terminal device **102** may execute using the internal configuration shown in FIG. **8****.** In particular, channel estimator **804** may first in stage **902** perform channel estimation using reference signals to estimate the effective channels of the predefined set of transmitters, namely network access nodes **110-140.** Terminal device **102** may already have prearranged knowledge of the identities and the transmitter indices of the network access nodes that are currently assigned to the predefined set of transmitters. For example, in some aspects, terminal device **102** may be configured to receive control signaling from radio communication network **100** that identifies the predefined set of transmitters (e.g., network access nodes **110-140**) and specifies the transmitter indices (e.g., "00", "01", "10", and "11", respectively) of the predefined set of transmitters. In some aspects, the control signaling may also specify the total size of the transmit bit vectors, the size of the modulation component vector, and the size of the transmitter index component vector.

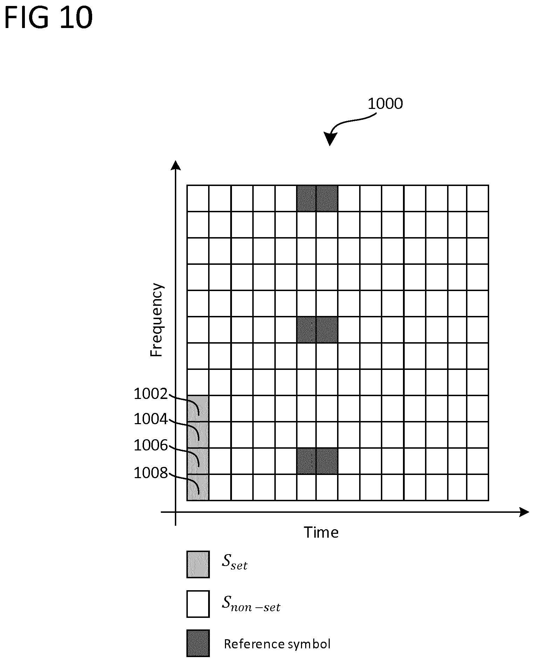

As channel estimator **804** therefore knows which network access nodes are assigned to the predefined set of transmitters, channel estimator **804** may be able to identify the time-frequency location of the reference symbols transmitted by the predefined set of transmitters and to estimate the effective channel of each of the predefined set of transmitters based on the reference symbols. FIG. **10** shows an exemplary resource grid **1000** that illustrates a time-frequency plot of reference symbols and modulation symbols. As shown in FIG. **10**, certain resource units (time-frequency resources; for example, Resource Elements (REs) in LTE) may be allocated to reference symbols, where network access nodes may be configured to transmit reference symbols at specific resource units. Each resource unit may be uniquely identified by a symbol period (containing one modulation symbol) and a subcarrier. For example, in an exemplary LTE context, cells may be configured to transmit cell-specific reference signals (CRS) at specific REs according to their physical cell identity (PCI), where each PCI specifies a unique set of REs that the cell is expected to transmit a CRS on. In the context of radio communication network **100**, each of network access nodes **110-140** may be configured to transmit reference signals at specific resource units according to their identities, where each resource unit assigned to a reference signal therefore holds a reference symbol transmitted by the corresponding network access node.

Accordingly, each of the reference symbols shown in resource grid **1000** may be a reference symbol transmitted by one of network access nodes **110-140** (the predefined set of transmitters), where channel estimator **804** is aware of which specific resource units contain reference symbols transmitted by each of network access nodes **110-140** by virtue of their identities (e.g., PCI or some other transmitter identifier). Channel estimator **804** may therefore estimate the effective channel for each of network access nodes **110-140** in stage **902** based on the reference symbols received from each of network access nodes **110-140.** In some aspects, this may include comparing a received reference symbol with a counterpart predefined reference symbol to characterize the effects of the channel on the transmitted reference symbol during propagation. In some aspects, as the reference symbols are located at different resource units, this can also include interpolating over time and/or frequency to estimate the effective channels at the resource units that do not contain reference symbols.

Channel estimator **804** may therefore estimate the effective channel for each of network access nodes **110-140**, and may provide the effective channel estimates to ML detector **802.** ML detector **802** may then perform ML detection on a set of received resource units *Sₛₑₜ* (each on a different subcarrier in the same symbol period) to obtain the transmitted modulation symbols (giving the modulation component vector) and the transmitter indices (giving the transmitter index component vector) for each resource unit in *Sₛₑₜ* in stage **904.** For example, as introduced above, ML detector **802** may test each possible modulation symbol (e.g., 64 in total for QAM 64) according to ML detection using a first effective channel (e.g., the effective channel for network access node **110**) to obtain a first set of likelihood metrics, test each possible modulation symbol according to ML detection using a second effective channel (e.g., the effective channel for network access node **120**) to obtain a second set of likelihood metrics, and so forth until four sets of likelihood metrics are obtained (e.g., for *M* = 4; one per effective channel). Each likelihood metric uniquely corresponds to the particular modulation symbol and effective channel which ML detector **802** used to calculate the likelihood metric. ML detector **802** may then select the modulation symbol-effective channel pair that produces the highest likelihood metric, and may then take the modulation symbol as the modulation symbol component vector and the transmitter index corresponding to the effective channel as the transmitter index component vector.

Accordingly, ML detector **802** may, for each resource unit in *Sₛₑₜ*, obtain the transmitter index and the transmitted modulation symbol in stage **904.** ML detector **802** may then check that the set of resource units *Sₛₑₜ* contains at least one resource unit transmitted from each of the predefined set of transmitters in stage **906.** If *Sₛₑₜ* does not contain at least one resource unit transmitted by each of network access nodes **110-140**, ML detector **802** may continue to perform ML detection on other resource units (on different subcarriers in the same symbol period as the original resource units of *Sₛₑₜ*) until ML detector **802** has identified at least one resource unit transmitted by each of network access nodes **110-140**, where the final version of *Sₛₑₜ* is a size-*M* set containing exactly one resource unit from each of the predefined set of *M* transmitters. In other words each transmitter index may be represented exactly once by the resource units *Sₛₑₜ*.

ML detector **802** may then specify the resource units *Sₛₑₜ* (e.g., according to subcarrier index) and the transmitter indices (as identified according to the effective channel) to spectrum analyzer **806.** Spectrum analyzer **806** may then in stage **908** calculate the spectrum envelopes *P̃ₛₑₜ* of the resource units *Sₛₑₜ*. As the transmitter indices for the resulting spectrum envelopes *P̃ₛₑₜ* are known (by virtue of the ML detection in stage **904;** in other words, ML detector **804** has already identified which of network access nodes **110-140** transmitted the reference symbols *Sₛₑₜ*), the spectrum envelopes *P̃ₛₑₜ* are 'known spectrum envelopes'. As *Sₛₑₜ* contains one resource unit transmitted by each of the predefined set of transmitters, the known spectrum envelopes *P̃ₛₑₜ* include a spectrum envelope of a resource unit transmitted by each of the predefined set of transmitters.

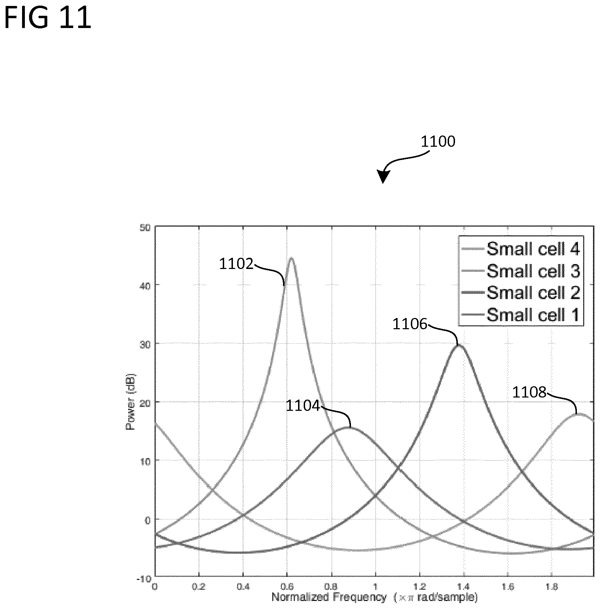

The known spectrum envelopes *P̃ₛₑₜ* calculated by spectrum analyzer **806** may therefore each characterize a respective one of the predefined set of transmitters. Terminal device **102** may then use the known spectrum envelopes as a means to differentiate between the predefined set of transmitters, such as to determine which of the predefined set of transmitters is likely to be the source transmitter for a given received modulation symbol. FIG. **11** illustrates an exemplary chart **1100** showing spectrum envelopes **1102**, **1104**, **1106**, and **1108**, where, for example, spectrum envelope **1102** is the spectrum envelope of *P̃ₛₑₜ* calculated by spectrum analyzer **806** from the resource unit of *Sₛₑₜ* transmitted by network access node **110**, spectrum envelope **1104** is the spectrum envelope of *P̃ₛₑₜ* calculated by spectrum analyzer **806** from the resource unit of *Sₛₑₜ* transmitted by network access node **120**, spectrum envelope **1106** is the spectrum envelope of *P̃ₛₑₜ* calculated by spectrum analyzer **806** from the resource unit of *Sₛₑₜ* transmitted by network access node **130**, and spectrum envelope **1108** is the spectrum envelope of *P̃ₛₑₜ* calculated by spectrum analyzer **806** from the resource unit of *Sₛₑₜ* transmitted by network access node **140.** As can be seen in the exemplary context of FIG. **11**, each of spectrum envelopes **1102-1108** may have a unique spectrum envelope, which can form a basis for differentiation between which of the predefined set of transmitters was the source transmitter for the corresponding resource units.

In various aspects, spectrum analyzer **806** may utilize a particular algorithm to calculate the known spectrum envelopes *P̃ₛₑₜ* in stage **908**, such as any processing algorithm that calculates a spectrum envelope of a received signal. In some aspects, spectrum analyzer **806** may utilize a MUltiple SIgnal Classification (MUSIC) algorithm, or any similar algorithm that calculates a spectrum envelope or spectrum envelope, to process sampled data for each resource unit in *Sₛₑₜ* to obtain the resulting known spectrum envelopes *P̃ₛₑₜ*. Other algorithms that can also be used in various aspects include the Estimation of Signal Parameters via Rotation Invariance Techniques (ESPIRIT), Maximum Likelihood, and Matrix Pencil algorithms. Such algorithms may take a digital sequence (e.g., a vector of baseband data) as input and produce a digital sequence as output. In some aspects, known spectrum envelopes *P̃ₛₑₜ* may each be a vector, such as vector of discretized angle points that give a power level at each angle (where, for example, spectrum envelopes **1102-1108** are each the plotted points of such a vector). In the case of MUSIC algorithm, the spectrum envelopes obtained by spectrum analyzer **806** may be used; however, any type of spectrum envelope represented by a vector or set of power values over frequency can be used in the same manner.

After obtaining the known spectrum envelopes *P̃ₛₑₜ*, spectrum analyzer **806** may then in stage **910** calculate unknown spectrum envelopes *P̃*_{*non*-*set*} for the resource units *S*_{*non*-*set*}, which are the remaining resource units that are not in *Sₛₑₜ*. Spectrum analyzer **806** may calculate unknown spectrum envelopes *P̃*_{*non*-*set*} using the same algorithm as used in stage **908** to calculate the known spectrum envelopes *P̃ₛₑₜ*.

Spectrum analyzer **806** may then provide the known spectrum envelopes *P̃ₛₑₜ* and the unknown spectrum envelopes *P̃ₛₑₜ* to selector **808.** Selector **808** may then be configured in stage **912** to compare the known spectrum envelopes *P̃ₛₑₜ* to the unknown spectrum envelopes *P̃*_{*non*-*set*} to identify which known spectrum envelopes *P̃ₛₑₜ* match with each unknown spectrum envelope *P̃*_{*non*-*set*}. In particular, as previously indicated each of known spectrum envelopes *P̃ₛₑₜ* characterizes a respective one of network access nodes **110-140.** Accordingly, if a given known spectrum envelope of *P̃ₛₑₜ* matches an unknown spectrum envelope of *P̃*_{*non*-*set*}, this may indicate that the resource unit of *Sₛₑₜ* corresponding to the unknown spectrum envelope of *P̃*_{*non*-*set*} was transmitted by the transmitter characterized by known spectrum envelope of *P̃ₛₑₜ*, or in other words, that the resource unit of *Sₛₑₜ* with which the known spectrum envelope of *P̃ₛₑₜ* was calculated has the same source transmitter as the resource unit of *S*_{*non*-*set*} with which the unknown spectrum envelope of *P̃*_{*non*-*set*} was calculated.

Selector **808** may be then configured to identify *L* matching spectrum envelopes from known spectrum envelopes *P̃ₛₑₜ* that match each unknown spectrum envelope *P̃*_{*non*-*set*} in stage **914** (where 1 ≤ *L ≤ M*), and then to identify the transmitter indices for the matching spectrum envelopes (which are already known by virtue of the ML detection on *Sₛₑₜ* from stage **904).** These *L* transmitter indices of the matching spectrum envelopes therefore give the transmitter indices of the set of source transmitter candidates. Selector **808** may therefore identify transmitter indices for the *L* source transmitter candidates for each resource unit in *S*_{*non*-*set*}.

In some aspects, selector **808** may compare the spectrum envelopes in stage **912** and identify the matching transmitter indices in stage **914** based on a distance metric, such as a mean-squared or Euclidean distance. For instance, given known spectrum envelopes *P̃ₛₑₜ* = [*p*_{*set*,1} *p*_{*set,*2} ··· *p_{set,M}*] and a single unknown spectrum envelope *p*_{*non*-*set*} of *P̃*_{*non*-*set*}, selector **808** may calculate ∥*p_{set,m}* - *p*_{*non*-*set*}∥², *m* = 1, ..., *M* (the Euclidean distance between the unknown spectrum envelope *p*_{*non*-*set*} and each known spectrum envelope of *P̃ₛₑₜ*, where each of *p*_{*non*-*set*} and *p_{set,m}* is a vector) in stage **912.** Selector **808** may then identify the *L* values of *m* ∈ {1, ..., *M*} for which ∥*p_{set,m}* - *pₙₒₙ₋ₛₑₜ*∥² is smallest in stage **914**, and may thus identify the *L* matching known spectrum envelopes and consequently the transmitter indices for the *L* source transmitter candidates. In some aspects, *L* may be fixed for each unknown spectrum envelope of *P̃*_{*non*-*set*}, or in other words, selector **808** may identify the same number *L* of source transmitter candidates for each resource unit of *S*_{*non*-*set*}. In other aspects, *L* may vary for different resource units of *S*_{*non*-*set*}, such as where selector **808** identifies *L* values of *m* for which ∥*p_{set,m}* - *p*_{*non-set,*1}∥² is less than a predefined threshold (or in other words, for which the distance between *p_{set,m}* and *p*_{*non-set,*1} is less than some predefined amount). In some aspects, if none of the known spectrum envelopes *P̃ₛₑₜ* present a suitable match for a given unknown spectrum envelope of *P̃ₙₒₙ₋ₛₑₜ* (e.g., no value of *m* produces a distance ∥*p_{set,m}* - *p*_{*non-set,*1}∥² less than another predefined threshold), selector 808 may take *L* = *M* and identify all of the *M* predefined set of transmitters as source transmitter candidates.

Accordingly, following stage **914** selector **808** may identify *L* transmitter indices (the transmitter indices for the set of source transmitter candidates) for each resource unit of *S*_{*non*-*set*} that identify the transmitters of the predefined set of transmitters (e.g., network access nodes **110-140**) that are candidates for being the source transmitter of each resource unit of *S*_{*non*-*set*}. Selector **808** may then provide the *L* transmitter indices, for each resource unit of *S*_{*non*-*set*}, to ML detector **802.** ML detector **802** may then perform ML detection for the resource units in *S*_{*non*-*set*} using the respective *L* transmitter indices for each resource unit of *S*_{*non*-*set*} (the set of source transmitter candidates) in stage **916.** As previously described regarding stage **904**, ML detector **802** may therefore test, for each resource unit of *S*_{*non*-*set*}, each of the possible modulation symbols using each of the *L* effective channels of the set of source transmitter candidates to determine which modulation symbol-effective channel pair presents the maximum likelihood of being the transmitted modulation symbol and source transmitter. As *L* < *M* (for at least some of the resource units of *S*_{*non*-*set*}, depending on whether *L* is the same for all resource units of *S*_{*non*-*set*} and whether *L* can equal *M* for some resource units of *Sₙₒₙ₋ₛₑₜ*), the number of computations done by ML detector **802** is therefore fewer than the general case where all *M* effective channels are used during ML detection.

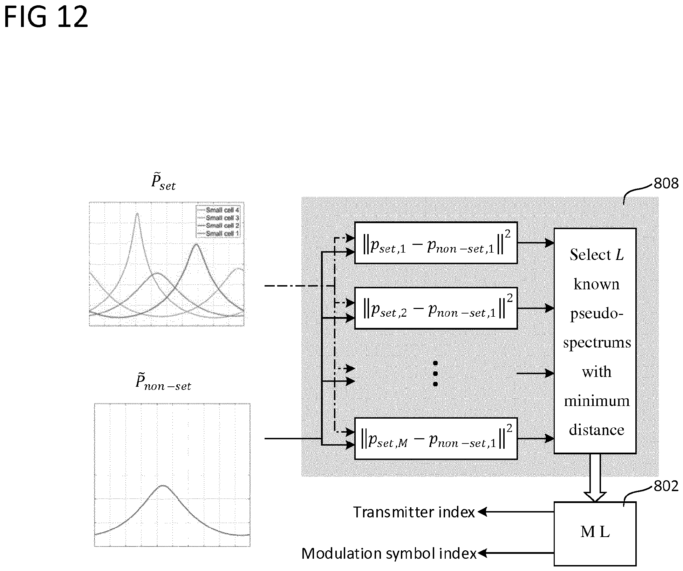

FIG. **12** shows an exemplary illustration of the process of stages **912-916.** As shown in FIG. **12**, selector **808** may receive known spectrum envelopes *P̃ₛₑₜ* and unknown spectrum envelopes *P̃*_{*non*-*set*} from spectrum analyzer **806.** For a given resource unit of *S*_{*non*-*set*} having unknown spectrum envelope *p*_{*non*-*set*} of *P̃ₙₒₙ₋ₛₑₜ*, selector **808** may then calculate the distance between *p*_{*non*-*set*} and each known spectrum envelope *p_{set,m}*, *m* = 1, ... , *M*. Selector 808 may then select the *L* matching known spectrum envelopes of *P̃ₛₑₜ* that result in a minimum distance, and indicate which of the predefined set of transmitters correspond to the *L* matching known spectrum envelopes *P̃_{match}* to ML detector **802** (i.e., indicate the set of source transmitter candidates). ML detector **802** may then retrieve the *L* effective channels corresponding to the set of source transmitter candidates (provided by channel estimator **804**) and perform ML detection using the *L* effective channels to identify which modulation symbol-effective channel pair is most likely to give the transmitted modulation symbol (e.g., identified by a unique modulation symbol index) and source transmitter (e.g., out of network access nodes **110-140**) for the resource unit of *S*_{*non*-*set*} currently being evaluated.

Selector **808** and ML detector **802** may perform this process for each resource unit of *S*_{*non*-*set*} to obtain a transmitter index and modulation symbol index for each received resource unit (e.g., all of the resource units of *Sₛₑₜ* and *S*_{*non*-*set*}, where ML detector **802** previously obtained the transmitter indices and modulation symbol indices for the resource units of *Sₛₑₜ* in stage **904**). As shown in FIG. **8**, ML detector **802** may then provide the transmitter index and modulation symbol index for each received resource unit to demapper **810**, which may then de-map the modulation symbols according to the modulation symbol indices to obtain the corresponding bits that give the modulation symbol component vector for each transmit bit vector. Demapper **810** may then combine the modulation symbol component vector with the transmitter index bit vector according on the transmitter index, and may therefore obtain the transmit bit vector for each resource unit (of *Sₛₑₜ* and *S*_{*non*-*set*}, which all occur in the same symbol period).

In some aspects, the set of source transmitter candidates can be set to *L* = 1 (or can be allowed to be *L* = 1 for some resource units of *S*_{*non*-*set*}, such as if only one known spectrum envelope *P̃ₛₑₜ* produces a distance less than a predefined threshold), meaning that only a single one of the predefined set of transmitters is considered as a candidate for the source transmitter at the output of selector **808.** As only one effective channel is therefore indicated to ML detector **802** as a possibility, ML detector **802** may therefore only perform ML detection (including testing all of the 2*^{N}* possible modulation symbols) for the lone effective channel indicated by selector **808.**

As shown in resource grid **1000** of FIG. **10**, terminal device **102** may repeat the process of method **900** for each symbol period (as each resource unit is eligible to be transmitted by any of the predefined set of transmitters). Instead of performing ML detection on each resource unit according to the full set of *M* effective channels, terminal device **102** may instead narrow down the set of effective channels to *L* total and then perform ML detection using the *L* effective channels (for the set of source transmitter candidates). The use of spectrum envelopes detailed above may therefore provide a unique characteristic by which terminal device **102** can differentiate between the predefined set of transmitters and, for each resource unit, identify a reduced set of *L* transmitters as source transmitter candidates. This can therefore enable terminal device **102** to reduce the demodulation complexity for receiving data in a 3D modulation with beam-hopping scheme.

In some aspects, the predefined set of transmitters may be dynamic, and can thus change over time. Radio communication network **100** may indicate these changes as control signaling transmitted to terminal device **102**, including changes in the transmitter indices (e.g., both for individual transmitters and for changes in the number of bits in the modulation symbol component vector and the transmitter index component vector) and in the transmitters assigned to the predefined set of transmitters. Terminal device **102** may then perform the same process of method **900** while taking into account any such changes.

In some aspects, terminal device **102** may additionally or alternatively utilize another criteria to narrow down the predefined set of transmitters to obtain the reduced set of source transmitter candidates. For example, in addition or alternative to spectrum envelope, in some aspects spectrum analyzer **806** and selector **808** may utilize multipath profile to identify the reduced set of source transmitter candidates. In particular, the channels between terminal device **102** and each of the predefined set of transmitters (e.g., network access nodes **110-140**) may each have a unique multipath profile according to the delay and gain of each multipath element that arrives at terminal device **102** following a point transmission. The delay and gain of each multipath element characterize the multipath profile, or the multipath impulse response, of the channel. As each channel is assumed to have different delays, gains, and numbers of multipath elements, each multipath profile is assumed to be different, and can thus be used a basis for differentiating between source transmitters.

Accordingly, in some aspects spectrum analyzer **806** may be configured to calculate the multipath profile for one or more of the resource unites in *S*_{*non-*s*et*}, and selector **808** may compare the multipath profiles to the known multipath profile for each of the predefined set of transmitters. Selector **808** may then select the reduced set of source transmitter candidates for each resource unit based on whether any of the known multipath profiles match the multipath profile for the resource unit, and then indicate the reduced set of source transmitter candidates to ML detector **802** for ML detection. In some aspects, spectrum analyzer **806** and selector **808** may utilize multipath profiles in this manner in addition to spectrum envelope, such as an additional criteria with which to measure how likely it is that a given one of the predefined set of transmitters is the source transmitter. In some aspects, spectrum analyzer **806** and selector **808** may utilize multipath profiles instead of spectrum envelope, and may therefore identify the reduced set of source transmitter candidates for one or more resource units exclusively using multipath profiles.

The aspects described herein may able to accurately narrow down the predefined set of transmitters to a set of source transmitter candidates in both Line-of-Sight (LOS) cases, i.e., where there is a direct path between the transmitters (e.g., network access node **110**) and receiver (terminal device **102**), and in non-LOS cases, i.e., where there is not a direct path between the transmitters and receiver. In LOS cases, there may not be multipath components between the source transmitter and the terminal device **102.** Accordingly, in such cases it may be possible to utilize an Angle-of-Arrival (AoA)-based technique to identify the source transmitter from the predefined set of transmitters. For example, terminal device **102** may determine the AoA of signals received from each of the predefined set of transmitters, and can thus identify the relative directions from terminal device **102** that each of the predefined set of transmitters are located. Terminal device **102** can then determine which of the predefined transmitters is the source transmitter for each received resource unit by calculating the AoA of each received resource unit and comparing these AoAs to the AoAs previously calculated for each of the predefined set of transmitters.

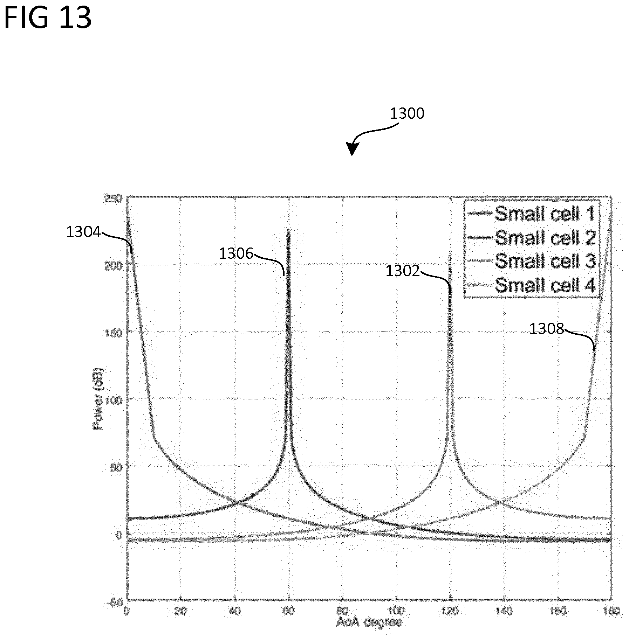

However, in many cases AoA estimation may only be reliable when there is an LOS path between the transmitters and terminal device **102**, and accordingly AoA estimation may not be accurate for non-LOS cases. For example, the MUSIC algorithm referenced above for calculation of the spectrum envelopes by spectrum analyzer **806** is one such algorithm that can be used for AoA estimation, where peaks in a given spectrum envelope vector can indicate the AoA of a given signal. FIG. **13** shows exemplary chart **1300** showing spectrum envelopes **1302**, **1304**, **1306**, and **1308** for an LOS case, where spectrum envelope **1302** is the spectrum envelope of a resource unit received from network access node **110**, spectrum envelope **1304** is the spectrum envelope of a resource unit received from network access node **120**, spectrum envelope **1306** is the spectrum envelope of a resource unit received from network access node **130**, and spectrum envelope **1308** is the spectrum envelope of a resource unit received from network access node **140**. In the exemplary context of FIG. **13**, each of network access nodes **110-140** may have an LOS path with terminal device **102**, and spectrum envelopes **1302-1308** may be calculated according to a pseudospectra analysis algorithm such as MUSIC (thus yielding pseudospectrum envelopes). As can be seen in chart **1300**, spectrum envelopes **1302-1308** may have very distinct peaks, where each peak occurs at a particular AoA degree as denoted on the X-axis. Accordingly, the AoA for each of network access nodes **110-140** can be identified from analysis of spectrum envelopes **1302-1308**, where, for example, the AoA for network access node **110** is around 120 digress, the AoA for network access node **120** is around 0 degrees, the AoA for network access node **130** is around 60 degrees, and the AOA for network access node **140** is around 180 degrees.

However, non-LOS cases may yield spectrum envelopes that do not have such well-defined peaks. For example, with reference back to chart **1100** in FIG. **11**, spectrum envelopes **1102-1108** may be calculated when network access nodes **110-140** have non-LOS paths with terminal device **102.** Accordingly, spectrum envelopes **1102-1108** may not have well-defined peaks at any particular angle, and may instead have slopes that are more shallow and gradual. Accordingly, terminal device **102** may not be able to identify the AoA as accurately for network access nodes **110-140** in the non-LOS cases, and consequently may not be able to utilize AoA during demodulation to identify the source transmitter.

While terminal device **102** may not be able to accurately determine the AoA in the non-LOS case, terminal device **102** can still utilize the spectrum envelope-based analysis described herein to differentiate between the predefined set of transmitters when identifying source transmitters. As can be seen from FIGs. **11** and **13**, both the non-LOS spectrum envelopes **1102-1108** in chart **1100** and the non-LOS spectrum envelopes **1302-1308** in chart **1300** have a distinct spectrum envelope. Accordingly, even though the non-LOS spectrum envelopes **1302-1308** may not exhibit a definite AoA, terminal device **102** can still utilize the spectrum envelope of non-LOS spectrum envelopes **1302-1308** to differentiate between source transmitters according to the techniques described above regarding FIGs. **8** and **9****.**

Accordingly, terminal device **102** may utilize the spectrum envelope-based analysis techniques described herein for both LOS and non-LOS cases. In particular, the distance metric ∥*p_{set,m}* - *p*_{*non*-*set*}∥² used to compare known spectrum envelopes of *P̃ₛₑₜ* and unknown spectrum envelopes *P̃*_{*non*-*set*} may be an effective mechanism for comparing spectrum envelopes regardless of whether the spectrum envelopes are LOS or non-LOS (although in some cases the distance metric-based comparison of spectrum envelopes may be more accurate for LOS spectrum envelopes due to their more definite envelopes).

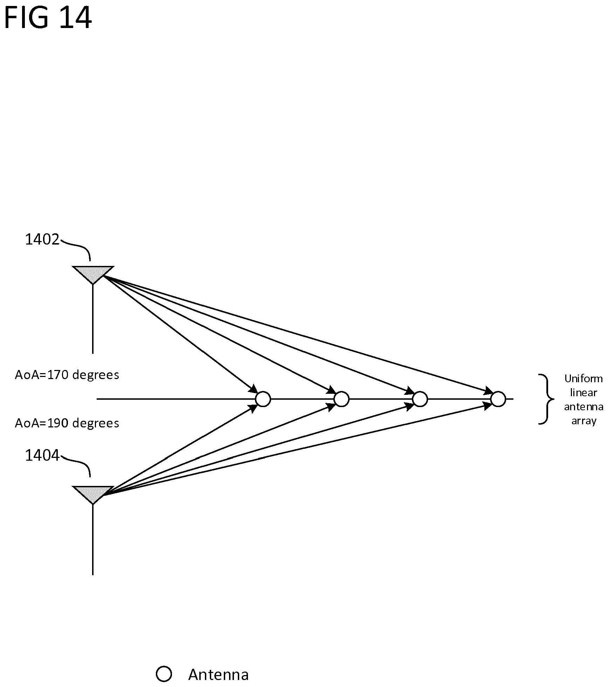

In some aspects, LOS channels may cause problems when attempting to differentiate between transmitters that have AoAs separated by 180 degrees. FIG. **14** shows an example in which a receiver using a uniform linear array may not be able to differentiate between transmitters **1402** and **1404** with AoAs separated by 180 degrees (namely, 170 degrees and 190 degrees). In particular, certain spectrum envelope calculation algorithms, including the MUSIC algorithm, may calculate the same spectrum envelope for two different transmitters that have AoAs separated by 180 degrees when using a linear antenna array. Accordingly, in some aspects antenna system **202** may be configured in configuration other than a uniform linear antenna array, such as in a circular antenna array. As a result, spectrum analyzer **806** may calculate different spectrum envelopes even for two transmitters positioned at AoAs separated by 180 degrees, which can therefore enable selector **808** to differentiate between the two transmitters. Additionally or alternatively, terminal device **102** may solve this problem by selecting the transmitters that are placed on AoAs between 0 to 180 degrees.

In some aspects, terminal device **102** may be configured to dynamically switch between ML detection using a reduced set of source transmitter candidates, or 'reduced candidate ML detection, and ML detection using the full predefined set of transmitters, or 'full ML detection'. For example, while the reduced candidate ML detection described above (with *L* source transmitter candidates as opposed to *M* in the full ML detection case) may reduce demodulation complexity, there may be a potential for some performance degradation. For instance, if selector **808** mistakenly omits the actual source transmitter for a given resource unit of *S*_{*non*-*set*} from the reduced set of source transmitter candidates, ML detector **802** will not use the correct effective channel when performing ML detection. As a result, ML detector **802** will not determine the correct transmitter index (as the actual source transmitter will not be considered during ML detection), and may also experience demodulation error as the correct effective channel will not be used for channel equalization during ML detection.

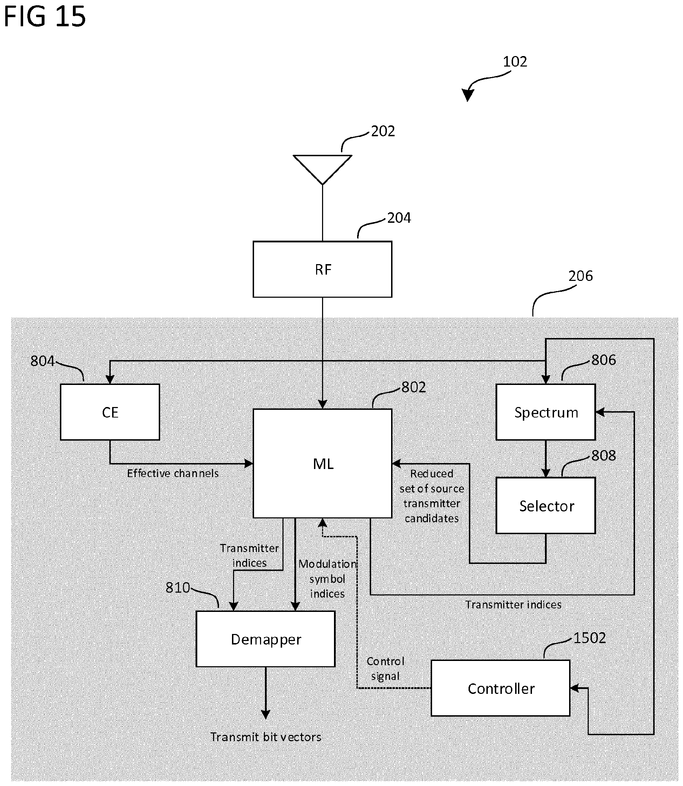

Accordingly, as shown in FIG. **15** in some aspects terminal device **102** may also include demodulation controller **1502.** Demodulation controller **1502** may be a software (e.g., one or more processors configured to retrieve and execute program code) and/or a hardware (e.g., one or more digitally-configured hardware circuits) component, and may receive baseband data from RF transceiver **204** as input. Demodulation controller **1502** may then be configured to process the baseband data to determine, based on current conditions, whether to use reduced candidate ML detection or full ML detection. Demodulation controller **1502** may then provide ML detector **802** with a control signal that instructs ML detector **802** to use reduced candidate ML detection or full ML detection. If demodulation controller **1502** instructs ML detector **802** to use reduced candidate ML detection, ML detector **802** may perform ML detection, for each resource unit in *S*_{*non*-*set*}, using the reduced set of source transmitter candidates (e.g., only with the effective channels for the *L* source transmitter candidates). Conversely, if demodulation controller **1502** instructs ML detector **802** to use full ML detection, ML detector **802** may perform ML detection, for each resource unit in *S*_{*non*-*set*}, using the predefined set of transmitters (e.g., with the effective channels for all *M* of the predefined set of transmitters).

In some aspects, demodulation controller **1502** may determine whether to use reduced candidate ML detection or full ML detection based on one or more communication condition indicators that indicate a characteristic of the current communication conditions of terminal device **102.** Without loss of generality, exemplary communication condition indicators that demodulation controller **1502** can use can include one or more of modulation order, LOS/non-LOS channels, frequency band, and SNR. Demodulation controller **1502** may thus be configured to consider one or more of such communication condition indicators, and in some aspects may aim to balance between performance and demodulation complexity when deciding whether to use full or reduced candidate ML detection.

For example, in some aspects the spectrum envelope-based reduced candidate ML detection described herein may be more accurate for high modulation orders than at lower modulation orders. Accordingly, if demodulation controller **1502** determines that the current modulation order (e.g., as specified to terminal device **102** as control signaling from radio communication network **100**) is high, demodulation controller **1502** may be configured to instruct ML detector **802** to utilize reduced candidate ML detection (and vice versa for low modulation order).

In some aspects, the spectrum envelope-based reduced candidate ML detection described herein may be accurate for LOS channels even when the modulation order is low, or if there is at least one strong non-LOS channel that can be clearly identified. Accordingly, if terminal device **102** has at least one strong LOS or non-LOS channel with the predefined set of transmitters (and, optionally, even when the modulation order is low), demodulation controller **1502** may be configured to instruct ML detector **802** to utilize reduced candidate ML detection (and vice versa for non-LOS channels). In some aspects, spectrum analyzer **806** may be configured to determine whether the channels are LOS channels or non-LOS channels, such as by evaluating the spectrum envelopes to determine whether there are definite peaks and/or steep slopes to positively identify an LOS channel.

In some aspects, the spectrum envelope-based reduced candidate ML detection described herein may be more accurate at lower frequency bands since higher frequency bands have produce non-LOS channel characteristics (due to the increased propagation attenuation of higher frequencies). Accordingly, if terminal device **102** is receiving with a lower frequency band (and, optionally, even if using a low modulation order), demodulation controller **1502** may be configured to instruct ML detector **802** to utilize reduced candidate ML detection (and vice versa for higher frequency bands). In some aspects, demodulation controller **1502** may be configured to receive an indication of the frequency band currently being used from another component of terminal device **102**, such as a baseband controller or protocol processor responsible for managing transmission and/or reception channels.

In some aspects, the spectrum envelope-based reduced candidate ML detection described herein may be more accurate at higher SNRs than for lower SNRs, in particular for non-LOS channels. Accordingly, if terminal device **102** has a low SNR (and, optionally, has non-LOS channels), demodulation controller **1502** may be configured to instruct ML detector 802 to utilize full ML detection (and vice versa for higher SNRs). In some aspects, demodulation controller **1502** may be configured to calculate the current SNR based on baseband data and/or may receive an indication of the current SNR from another SNR measurement component of terminal device **102.**

Accordingly, based on one or more of the communication condition indicators at any given time, demodulation controller **1502** may be configured to decide whether to use reduced candidate ML detection or full ML detection, and to instruct ML detector **802** to perform demodulation accordingly. By switching between reduced candidate ML detection or full ML detection based on the current conditions, terminal device **102** may balance between performance and demodulation complexity.

Various aspects described herein may focus on the Angle-of-Arrival (AoA) based differentiation of Source Base Station. Note that the proposed method is applicable to any set of wireless transmission sources which need to be differentiated by the receiver and which are characterized by i) different angles of arrival and ii) different multipath profiles. For example, the method can be used by a base station / access point to differentiate between various UEs which are located on different geographic spots in proximity to the concerned base station / access point. Also, it would be possible to apply the method in a Device-to-Device (or Vehicle-to-Vehicle) communication case where the source is differentiated through the angle of arrival of (multipath based) emissions. This method may thus be useful, in some but not necessarily all cases, to improve decoding efficiency in general by first selecting a 'candidate subset' of all devices/base stations/access points/etc. which are then further considered by decoding their respective IDs in signaling fields, etc.

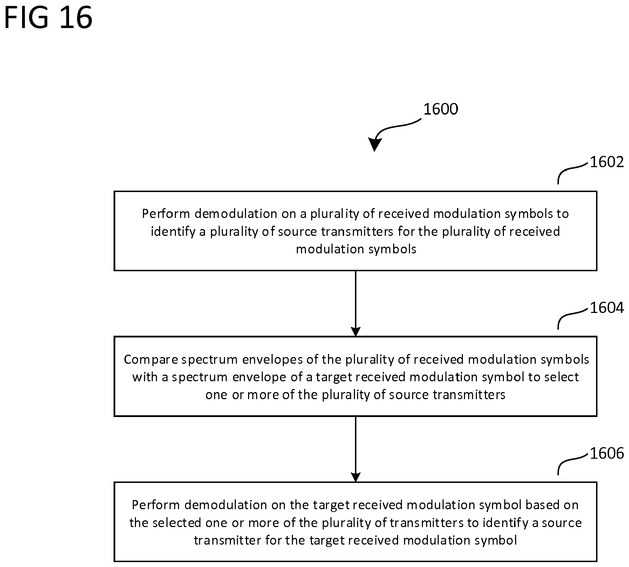

FIG. **16** shows method **1600** of processing and demodulating wireless signals. As shown in FIG. **16**, method **1600** includes performing demodulation on a plurality of received modulation symbols to identify a plurality of source transmitters for the plurality of received modulation symbols (**1602**), comparing spectrum envelopes of the plurality of received modulation symbols with a spectrum envelope of a target received modulation symbol to select one or more of the plurality of source transmitters (**1604**), and performing demodulation on the target received modulation symbol based on the selected one or more of the plurality of source transmitters to identify a source transmitter for the target received modulation symbol (**1606**).

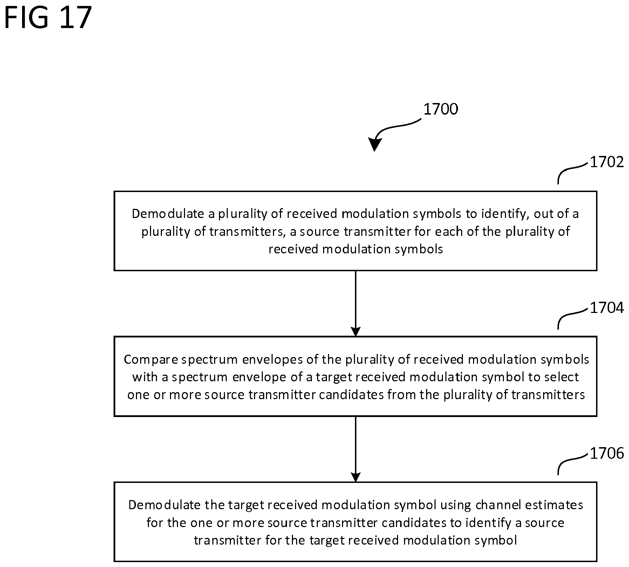

FIG. **17** shows method **1700** of processing and demodulating wireless signals. As shown in FIG. **17**, method **1700** includes demodulating a plurality of received modulation symbols to identify, out of a plurality of transmitters, a source transmitter for each of the plurality of received modulation symbols (**1702**), comparing spectrum envelopes of the plurality of received modulation symbols with a spectrum envelope of a target received modulation symbol to select one or more source transmitter candidates out of the plurality of transmitters (**1704**), and demodulating the target received modulation symbol using channel estimates for the one or more source transmitter candidates to identify a source transmitter for the target received modulation symbol (**1706**).

While the above descriptions and connected figures may depict electronic device components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

The following examples pertain to further aspects of this disclosure:
Example 1 is a communication device configured for wireless communications, the communication device including a detector configured to perform demodulation on a plurality of received modulation symbols to identify a plurality of source transmitters for the plurality of received modulation symbols, and a selector configured to compare spectrum envelopes of the plurality of received modulation symbols with a spectrum envelope of a target received modulation symbol to select one or more of the plurality of source transmitters, the detector further configured to perform demodulation on the target received modulation symbol based on the selected one or more of the plurality of source transmitters to identify a source transmitter for the target received modulation symbol.
In Example 2, the subject matter of Example 1 can optionally include wherein the detector is further configured to identify a transmitted modulation symbol for the target received modulation symbol by the demodulation.
In Example 3, the subject matter of Example 2 can optionally further include a demapper configured to recover a transmit bit vector for the target received modulation symbol based on the transmitted modulation symbol and an identity of the source transmitter.
In Example 4, the subject matter of Example 3 can optionally include wherein the demapper is configured to determine a first component vector of the transmit bit vector by demapping the transmitted modulation symbol data to obtain corresponding digital bits, and to determine a second component vector of the transmit bit vector by identifying a transmitter index assigned to the source transmitter.
In Example 5, the subject matter of any one of Examples 2 to 4 can optionally include wherein the detector, the selector, and the demapper are configured to recover a transmit bit vector for each of a second plurality of received modulation symbols that includes the target received modulation symbol, where each of the plurality of modulation symbols and the second plurality of received modulation symbols correspond to different subcarriers in a same symbol period.
In Example 6, the subject matter of any one of Examples 1 to 5 can optionally further include a channel estimator configured to estimate an effective channel for each of the plurality of source transmitters, wherein the detector is configured to perform the demodulation on the target received modulation symbol using the effective channels for the selected one or more of the plurality of source transmitter.
In Example 7, the subject matter of Example 6 can optionally include wherein the one or more of the plurality of source transmitters are a reduced subset of the plurality of transmitters, and wherein the detector is configured to perform the demodulation on the target received modulation symbol using the effective channels for the selected one or more of the plurality of source transmitters while excluding other transmitters of the plurality of source transmitters from being the source transmitter for the target received modulation symbol.
In Example 8, the subject matter of Example 6 can optionally include wherein the detector is configured to identify the source transmitter for the target received modulation symbol by determining which of the effective channels for the selected one or more of the plurality of source transmitter produces a most likely demodulation result according to maximum likelihood (ML) detection, and by identifying the transmitter of the plurality of source transmitters that corresponds to the determined effective channel as the source transmitter.
In Example 9, the subject matter of any one of Examples 6 to 8 can optionally include wherein the channel estimator is configured to process a plurality of reference symbols received from the plurality of source transmitters to estimate the effective channels for the plurality of transmitters.
In Example 10, the subject matter of any one of Examples 6 to 9 can optionally include wherein the detector is configured to perform the demodulation on the plurality of received modulation symbols and the target received modulation symbol by performing maximum likelihood (ML) detection on the plurality of received modulation symbols and the target received modulation symbol.
In Example 11, the subject matter of any one of Examples 1 to 10 can optionally further include a spectrum analyzer configured to calculate the spectrum envelopes of the plurality of received modulation symbols and the spectrum envelope of the target received modulation symbol.
In Example 12, the subject matter of Example 11 can optionally include wherein the spectrum analyzer is configured to calculate the spectrum envelopes of the plurality of received modulation symbols and the spectrum envelope of the target received modulation symbol using a MUltiple SIgnal Classification (MUSIC) algorithm.
In Example 13, the subject matter of any one of Examples 1 to 12 can optionally include wherein the spectrum envelopes of the plurality of received modulation symbols and the spectrum envelope of the target received modulation symbol are pseudospectrums.
In Example 14, the subject matter of any one of Examples 1 to 13 can optionally include wherein the selector is configured to compare the spectrum envelopes of the plurality of received modulation symbols with the spectrum envelope of the target received modulation symbol to select the selected one or more of the plurality of source transmitters by calculating a respective distance between the spectrum envelope of the target received modulation symbol and each of the spectrum envelopes of the plurality of received modulation symbols, and selecting the selected one or more of the plurality of source transmitters based on which of the respective distances are smallest.
In Example 15, the subject matter of Example 14 can optionally include wherein the selector is configured to select the selected one or more of the plurality of source transmitters based on which of the respective distances are smallest by selecting a quantity of the plurality of transmitters that are the source transmitters for the plurality of received modulation symbols that produce the smallest respective distances.
In Example 16, the subject matter of Example 14 can optionally include wherein the selector is configured to select the selected one or more of the plurality of source transmitters based on which of the respective distances are smallest by selecting all of transmitters of the plurality of transmitters that are the source transmitters for the plurality of received modulation symbols that produce a respective distance less than a predefined threshold.
In Example 17, the subject matter of any one of Examples 14 to 16 can optionally include wherein the selector is configured to calculate the respective distances as mean-squared distances or Euclidean distances.
In Example 18, the subject matter of any one of Examples 1 to 17 can optionally include wherein each of the plurality of transmitters is the source transmitter for at least one of the plurality of received modulation symbols.
In Example 19, the subject matter of any one of Examples 1 to 18 can optionally include wherein each of the plurality of transmitters is assigned a respective transmitter index.
In Example 20, the subject matter of any one of Examples 1 to 19 can optionally be configured as a baseband processing component for a terminal device.
In Example 21, the subject matter of any one of Examples 1 to 19 can optionally further include a radio frequency (RF) transceiver configured to receive and process wireless RF signals to obtain baseband data including the plurality of received demodulation symbols and the target received modulation symbol.
In Example 22, the subject matter of Example 21 can optionally further include one or more antennas.
In Example 23, the subject matter of Example 21 or 22 can optionally be configured as a terminal device.
In Example 24, the subject matter of any one of Examples 1 to 23 can optionally include wherein the plurality of transmitters are pre-assigned transmitters in a three-dimensional (3D) modulation with beam-hopping scheme.
Example 25 is a communication device configured for wireless communications, the communication device including a detector configured to demodulate a plurality of received modulation symbols to identify, out of a plurality of transmitters, a source transmitter for each of the plurality of received modulation symbols, and a selector configured to compare spectrum envelopes of the plurality of received modulation symbols with a spectrum envelope of a target received modulation symbol to select one or more source transmitter candidates from the plurality of transmitters, the detector further configured to demodulate the target received modulation symbol using channel estimates for the one or more source transmitter candidates to identify a source transmitter for the target received modulation symbol.
In Example 26, the subject matter of Example 25 can optionally include wherein the detector is configured to identify a transmitted modulation symbol for the target received modulation symbol during the demodulating.
In Example 27, the subject matter of Example 26 can optionally further include a demapper configured to recover a transmit bit vector for the target received modulation symbol based on the transmitted modulation symbol and a predefined transmitter index for the source transmitter.
In Example 28, the subject matter of Example 27 can optionally include wherein the demapper is configured to determine a first component vector of the transmit bit vector by demapping the transmitted modulation symbol to obtain corresponding digital bits, and to determine a second component vector of the transmit bit vector as the predefined transmitter index for the source transmitter.
In Example 29, the subject matter of Example 27 or 28 can optionally include wherein the detector, the selector, and the demapper are configured to recover a transmit bit vector for each of a second plurality of received modulation symbols that includes the target received modulation symbol, where each of the plurality of modulation symbols and the second plurality of received modulation symbols correspond to different subcarriers in a same symbol period.
In Example 30, the subject matter of any one of Examples 25 to 29 can optionally further include a channel estimator configured to obtain channel estimates for the plurality of transmitters including the channel estimates for the one or more source transmitter candidates.
In Example 31, the subject matter of Example 30 can optionally include wherein the one or more source transmitter candidates are a reduced subset of the plurality of transmitters, and wherein the detector is configured to demodulate the target received modulation symbol using the channel estimates for the one or more source transmitter candidates while excluding other transmitters of the plurality of transmitters from consideration as the source transmitter for the target received modulation symbol.
In Example 32, the subject matter of Example 30 can optionally include wherein the detector is configured to identify the source transmitter for the target received modulation symbol by determining which of the channel estimates for the one or more source transmitter candidates produces a most likely demodulation result according to maximum likelihood (ML) detection, and by identifying the transmitter of the plurality of transmitters that corresponds to the determined channel estimates as the source transmitter.
In Example 33, the subject matter of any one of Examples 30 to 32 can optionally include wherein the channel estimator is configured to process a plurality of reference symbols received from the plurality of transmitters to obtain the channel estimates for the plurality of transmitters.
In Example 34, the subject matter of any one of Examples 30 to 33 can optionally include wherein the detector is configured to perform maximum likelihood (ML) detection on the plurality of received modulation symbols and the target received modulation symbol.
In Example 35, the subject matter of any one of Examples 25 to 34 can optionally further include a spectrum analyzer configured to calculate the spectrum envelopes of the plurality of received modulation symbols and the spectrum envelope of the target received modulation symbol.
In Example 36, the subject matter of Example 35 can optionally include wherein the spectrum analyzer is configured to calculate the spectrum envelopes of the plurality of received modulation symbols and the spectrum envelope of the target received modulation symbol using a MUltiple SIgnal Classification (MUSIC) algorithm.
In Example 37, the subject matter of any one of Examples 25 to 36 can optionally include wherein the spectrum envelopes of the plurality of received modulation symbols and the spectrum envelope of the target received modulation symbol are pseudospectrums.
In Example 38, the subject matter of any one of Examples 25 to 37 can optionally include wherein the selector is configured to compare the spectrum envelopes of the plurality of received modulation symbols with the spectrum envelope of the target received modulation symbol to select the one or more source transmitter candidates by calculating a respective distance between the spectrum envelope of the target received modulation symbol and each of the spectrum envelopes of the plurality of received modulation symbols, and selecting the one or more source transmitter candidates based on which of the respective distances are smallest.
In Example 39, the subject matter of Example 38 can optionally include wherein the selector is configured to select the one or more source transmitter candidates based on which of the respective distances are smallest by selecting a predefined quantity of the plurality of transmitters that are the source transmitters for the plurality of received modulation symbols that produce the smallest respective distances.
In Example 40, the subject matter of Example 38 can optionally include wherein the selector is configured to select the one or more source transmitter candidates based on which of the respective distances are smallest by selecting all of transmitters of the plurality of transmitters that are the source transmitters for the plurality of received modulation symbols that produce a respective distance less than a predefined threshold.
In Example 41, the subject matter of any one of Examples 38 to 40 can optionally include wherein the selector is configured to calculate the respective distances as mean-squared distances or Euclidean distances.
In Example 42, the subject matter of any one of Examples 25 to 41 can optionally include wherein each of the plurality of transmitters is the source transmitter for at least one of the plurality of received modulation symbols.
In Example 43, the subject matter of any one of Examples 25 to 42 can optionally include wherein each of the plurality of transmitters is assigned a respective transmitter index.
In Example 44, the subject matter of any one of Examples 25 to 43 can optionally be configured as a baseband processing component for a terminal device.
In Example 45, the subject matter of any one of Examples 25 to 43 can optionally further include a radio frequency (RF) transceiver configured to receive and process wireless RF signals to obtain baseband data including the plurality of received demodulation symbols and the target received modulation symbol.
In Example 46, the subject matter of Example 45 can optionally further include one or more antennas.
In Example 47, the subject matter of Example 44 or 45 can optionally be configured as a terminal device.
In Example 48, the subject matter of any one of Examples 25 to 47 can optionally include wherein the plurality of transmitters are pre-assigned transmitters in a three-dimensional (3D) modulation with beam-hopping scheme.
Example 49 is a method of processing and demodulating wireless signals, the method including performing demodulation on a plurality of received modulation symbols to identify a plurality of source transmitters for the plurality of received modulation symbols, comparing spectrum envelopes of the plurality of received modulation symbols with a spectrum envelope of a target received modulation symbol to select one or more of the plurality of source transmitters , and performing demodulation on the target received modulation symbol based on the selected one or more of the plurality of transmitters to identify a source transmitter for the target received modulation symbol.
In Example 50, the subject matter of Example 49 can optionally include wherein the demodulation on the target received modulation symbol based on the selected one or more of the plurality of source transmitters identifies a transmitted modulation symbol.
In Example 51, the subject matter of Example 50 can optionally further include recovering a transmit bit vector for the target received modulation symbol based on the transmitted modulation symbol and an identity of the source transmitter.
In Example 52, the subject matter of Example 51 can optionally include wherein recovering the transmit bit vector includes determining a first component vector of the transmit bit vector by demapping the transmitted modulation symbol data to obtain corresponding digital bits, and determining a second component vector of the transmit bit vector by identifying a transmitter index assigned to the source transmitter.
In Example 53, the subject matter of Example 51 or 52 can optionally further include recovering a transmit bit vector for each of a second plurality of received modulation symbols, that includes the target received modulation symbol, by demodulating and comparing spectrum envelopes, where each of the plurality of modulation symbols and the second plurality of received modulation symbols correspond to different subcarriers in a same symbol period.
In Example 54, the subject matter of any one of Examples 49 to 53 can optionally further include estimating an effective channel for each of the plurality of transmitters, wherein performing the demodulation on the target received modulation symbol includes using the effective channels for the selected one or more of the plurality of source transmitters to demodulate the target received modulation symbol.
In Example 55, the subject matter of Example 54 can optionally include wherein the selected one or more of the plurality of source transmitters are a reduced subset of the plurality of transmitters, and performing the demodulation on the target received modulation symbol includes using the effective channels for the selected one or more of the plurality of source transmitters for demodulation while excluding other transmitters of the plurality of transmitters from consideration as the source transmitter for the target received modulation symbol.
In Example 56, the subject matter of Example 54 can optionally include wherein identifying the source transmitter for the target received modulation symbol includes determining which of the effective channels for the selected one or more of the plurality of source transmitters produces a most likely demodulation result according to maximum likelihood (ML) detection, and identifying the transmitter of the plurality of transmitters that corresponds to the determined effective channel as the source transmitter.
In Example 57, the subject matter of any one of Examples 54 to 56 can optionally include wherein estimating the effective channel for each of the plurality of transmitters includes processing a plurality of reference symbols received from the plurality of transmitters to estimate the effective channels for the plurality of transmitters.
In Example 58, the subject matter of any one of Examples 54 to 57 can optionally include wherein performing the demodulation on the plurality of received modulation symbols and the target received modulation symbol includes performing maximum likelihood (ML) detection on the plurality of received modulation symbols and the target received modulation symbol.
In Example 59, the subject matter of any one of Examples 49 to 58 can optionally further include calculating the spectrum envelopes of the plurality of received modulation symbols and the spectrum envelope of the target received modulation symbol.
In Example 60, the subject matter of Example 59 can optionally include wherein calculating the spectrum envelopes of the plurality of received modulation symbols and the target received modulation symbol includes calculating the spectrum envelopes using a MUltiple SIgnal Classification (MUSIC) algorithm.
In Example 61, the subject matter of any one of Examples 49 to 60 can optionally include wherein the spectrum envelopes of the plurality of received modulation symbols and the spectrum envelope of the target received modulation symbol are pseudospectrums.
In Example 62, the subject matter of any one of Examples 49 to 61 can optionally include wherein comparing the spectrum envelopes of the plurality of received modulation symbols with the spectrum envelope of the target received modulation symbol to select the selected one or more of the plurality of source transmitters includes calculating a respective distance between the spectrum envelope of the target received modulation symbol and each of the spectrum envelopes of the plurality of received modulation symbols, and selecting the selected one or more of the plurality of source transmitters based on which of the respective distances are smallest.
In Example 63, the subject matter of Example 62 can optionally include wherein selecting the selected one or more of the plurality of source transmitters based on which of the respective distances are smallest includes selecting a predefined quantity of the plurality of transmitters that are the source transmitters for the plurality of received modulation symbols that produce the smallest respective distances.
In Example 64, the subject matter of Example 63 can optionally include wherein selecting the selected one or more of the plurality of source transmitters based on which of the respective distances are smallest includes selecting all of transmitters of the plurality of transmitters that are the source transmitters for the plurality of received modulation symbols that produce a respective distance less than a predefined threshold.
In Example 65, the subject matter of any one of Examples 62 to 64 can optionally include wherein calculating the respective distances includes calculating mean-squared distances or Euclidean distances.
In Example 66, the subject matter of any one of Examples 49 to 65 can optionally include wherein each of the plurality of transmitters is the source transmitter for at least one of the plurality of received modulation symbols.
In Example 67, the subject matter of any one of Examples 49 to 66 can optionally include wherein each of the plurality of transmitters is assigned a respective transmitter index.
In Example 68, the subject matter of any one of Examples 49 to 66 can optionally further include receiving and processing wireless radio signals to obtain baseband data including the plurality of received demodulation symbols and the target received modulation symbol.
In Example 69, the subject matter of any one of Examples 49 to 68 can optionally include wherein the plurality of transmitters are pre-assigned transmitters in a three-dimensional (3D) modulation with beam-hopping scheme.
Example 70 is a non-transitory computer readable medium storing instructions that when executed by one or more processors cause the one or more processors to perform the method of any one of Examples 49 to 69.
Example 71 is a non-transitory computer readable medium storing instructions that when executed by a controller of a terminal device cause terminal device to perform the method of any one of Examples 49 to 69.
Example 72 is a communication device including one or more processors configured to execute program code to perform the method of any one of Examples 49 to 69.
Example 73 is a method of processing and demodulating wireless signals, the method including demodulating a plurality of received modulation symbols to identify, out of a plurality of transmitters, a source transmitter for each of the plurality of received modulation symbols, comparing spectrum envelopes of the plurality of received modulation symbols with a spectrum envelope of a target received modulation symbol to select one or more source transmitter candidates from the plurality of transmitters, and demodulating the target received modulation symbol using channel estimates for the one or more source transmitter candidates to identify a source transmitter for the target received modulation symbol.
In Example 74, the subject matter of Example 73 can optionally include wherein demodulating the target received modulation symbol using the channel estimates for the one or more source transmitter candidates identifies a transmitted modulation symbol for the target received modulation symbol.
In Example 75, the subject matter of Example 74 can optionally further include recovering a transmit bit vector for the target received modulation symbol based on the transmitted modulation symbol and a predefined transmitter index for the source transmitters.
In Example 76, the subject matter of Example 75 can optionally include wherein recovering the transmit bit vector for the target received modulation symbol includes determining a first component vector of the transmit bit vector by demapping the transmitted modulation symbol to obtain corresponding digital bits, and determining a second component vector of the transmit bit vector as the predefined transmitter index for the source transmitter.
In Example 77, the subject matter of Example 75 or 76 can optionally further include recovering a transmit bit vector for each of a second plurality of received modulation symbols, that includes the target received modulation symbol, by demodulating and comparing spectrum envelopes, where each of the plurality of modulation symbols and the second plurality of received modulation symbols correspond to different subcarriers in a same symbol period.
In Example 78, the subject matter of any one of Examples 73 to 77 can optionally further include obtaining channel estimates for the plurality of transmitters including the channel estimates for the one or more source transmitter candidates.
In Example 79, the subject matter of Example 78 can optionally include wherein the one or more source transmitter candidates are a reduced subset of the plurality of transmitters, and demodulating the target received modulation symbol includes demodulating the target received modulation symbol using the channel estimates for the one or more source transmitter candidates while excluding other transmitters of the plurality of transmitters from consideration as the source transmitter for the target received modulation symbol.
In Example 80, the subject matter of Example 73 can optionally include wherein identifying the source transmitter for the target received modulation symbol includes determining which of the channel estimates for the one or more source transmitter candidates produces a most likely demodulation result according to maximum likelihood (ML) detection, and identifying the transmitter of the plurality of transmitters that corresponds to the determined channel estimates as the source transmitter.
In Example 81, the subject matter of any one of Examples 78 to 80 can optionally include wherein obtaining the channel estimates for the plurality of transmitters includes processing a plurality of reference symbols received from the plurality of transmitters.
In Example 82, the subject matter of any one of Examples 78 to 81 can optionally include wherein demodulating the plurality of received modulation symbols and the target received modulation symbol includes performing maximum likelihood (ML) detection to demodulate the plurality of received modulation symbols and the target received modulation symbol.
In Example 83, the subject matter of any one of Examples 73 to 82 can optionally further include calculating the spectrum envelopes of the plurality of received modulation symbols and the spectrum envelope of the target received modulation symbol.
In Example 84, the subject matter of Example 83 can optionally include wherein calculating the spectrum envelopes of the plurality of received modulation symbols and the target received modulation symbol includes calculating the spectrum envelopes using a MUltiple SIgnal Classification (MUSIC) algorithm.
In Example 85, the subject matter of any one of Examples 73 to 84 can optionally include wherein the spectrum envelopes of the plurality of received modulation symbols and the spectrum envelope of the target received modulation symbol are pseudospectrums.
In Example 86, the subject matter of any one of Examples 73 to 38 can optionally include wherein comparing the spectrum envelopes of the plurality of received modulation symbols with the spectrum envelope of the target received modulation symbol to select the one or more source transmitter candidates includes calculating a respective distance between the spectrum envelope of the target received modulation symbol and each of the spectrum envelopes of the plurality of received modulation symbols, and selecting the one or more source transmitter candidates based on which of the respective distances are smallest.
In Example 87, the subject matter of Example 76 can optionally include wherein selecting the one or more source transmitter candidates based on which of the respective distances are smallest includes selecting a predefined quantity of the plurality of transmitters that are the source transmitters for the plurality of received modulation symbols that produce the smallest respective distances.
In Example 88, the subject matter of Example 86 can optionally include wherein selecting the one or more source transmitter candidates based on which of the respective distances are smallest includes selecting all of transmitters of the plurality of transmitters that are the source transmitters for the plurality of received modulation symbols that produce a respective distance less than a predefined threshold.
In Example 89, the subject matter of any one of Examples 86 to 88 can optionally include wherein calculating the respective distances includes calculating the respective distances as mean-squared distances or Euclidean distances.
In Example 90, the subject matter of any one of Examples 73 to 89 can optionally include wherein each of the plurality of transmitters is the source transmitter for at least one of the plurality of received modulation symbols.
In Example 91, the subject matter of any one of Examples 73 to 90 can optionally further include receiving and processing wireless RF signals to obtain baseband data including the plurality of received demodulation symbols and the target received modulation symbol.
In Example 92, the subject matter of any one of Examples 73 to 91 can optionally include wherein the plurality of transmitters are pre-assigned transmitters in a three-dimensional (3D) modulation with beam-hopping scheme.
Example 93 is a non-transitory computer readable medium storing instructions that when executed by one or more processors cause the one or more processors to perform the method of any one of Examples 73 to 92.
Example 94 is a non-transitory computer readable medium storing instructions that when executed by a controller of a terminal device cause terminal device to perform the method of any one of Examples 73 to 92.
Example 95 is a communication device including one or more processors configured to execute program code to perform the method of any one of Examples 73 to 92.

The invention is defined solely by the appended claims.

## Claims

1. A communication device (102) configured for wireless communications, the communication device comprising:
a detector (802) configured to perform demodulation on a plurality of received modulation symbols to identify a plurality of source transmitters (110-140) for the plurality of received modulation symbols, wherein the identified plurality of source transmitters (110-140) comprises each of a predefined set of transmitters; and
a selector (808) configured to compare spectrum envelopes of the plurality of received modulation symbols with a spectrum envelope of a target received modulation symbol to select one or more of the plurality of source transmitters, wherein the one or more of the plurality of source transmitters (110-140) are a reduced subset of the plurality of source transmitters (110-140), wherein the target received modulation symbol is not part of the plurality of the received modulation symbols, and wherein the target received modulation symbol and the plurality of the received modulation symbols are in the same symbol period,
the detector (802) further configured to perform demodulation on the target received modulation symbol based on the selected one or more of the plurality of source transmitters (110-140) to identify a source transmitter for the target received modulation symbol from the reduced subset.

2. The communication device (102) of claim 1, wherein the detector (802) is further configured to identify a transmitted modulation symbol for the target received modulation symbol by the demodulation.

3. The communication device (102) of claim 2, further comprising a demapper (810) configured to recover a transmit bit vector for the target received modulation symbol based on the transmitted modulation symbol and an identity of the source transmitter.

4. The communication device (102) of claim 3, wherein the demapper (810) is configured to determine a first component vector of the transmit bit vector by demapping the transmitted modulation symbol data to obtain corresponding digital bits, and to determine a second component vector of the transmit bit vector by identifying a transmitter index assigned to the source transmitter.

5. The communication device (102) of any one of claims 3 to 4, wherein the detector (802), the selector (808), and the demapper (810) are configured to recover a transmit bit vector for each of a second plurality of received modulation symbols that includes the target received modulation symbol, where each of the plurality of modulation symbols and the second plurality of received modulation symbols correspond to different subcarriers in a same symbol period.

6. The communication device (102) of any one of claims 1 to 5, further comprising a channel estimator (804) configured to estimate an effective channel for each of the plurality of source transmitters, wherein the detector (802) is configured to perform the demodulation on the target received modulation symbol using the effective channels for the selected one or more of the plurality of source transmitters (110-140).

7. The communication device (102) of claim 6, wherein the detector (802) is configured to perform the demodulation on the target received modulation symbol using the effective channels for the selected one or more of the plurality of source transmitters (110-140) while excluding other transmitters of the plurality of source transmitters (110-140) from being the source transmitter for the target received modulation symbol.

8. The communication device (102) of claim 6, wherein the detector (802) is configured to identify the source transmitter for the target received modulation symbol by determining which of the effective channels for the selected one or more of the plurality of source transmitters (110-140) produces a most likely demodulation result according to maximum likelihood, ML, detection, and by identifying the transmitter of the plurality of source transmitters (110-140) that corresponds to the determined effective channel as the source transmitter.

9. The communication device (102) of any one of claims 1 to 8, wherein the selector (808) is configured to compare the spectrum envelopes of the plurality of received modulation symbols with the spectrum envelope of the target received modulation symbol to select the selected one or more of the plurality of source transmitters (110-140) by:
calculating a respective distance between the spectrum envelope of the target received modulation symbol and each of the spectrum envelopes of the plurality of received modulation symbols; and
selecting the selected one or more of the plurality of source transmitters (110-140) based on which of the respective distances are smallest.

10. The communication device (102) of any one of claims 1 to 9, wherein each of the plurality of source transmitters (110-140) is the source transmitter for at least one of the plurality of received modulation symbols.

11. The communication device (102) of any one of claims 1 to 10, configured as a baseband processing component (206) for a terminal device (102).

12. The communication device (102) of any one of claims 1 to 10, further comprising a radio frequency, RF, transceiver (204) configured to receive and process wireless RF signals to obtain baseband data comprising the plurality of received demodulation symbols and the target received modulation symbol.

13. A method of processing and demodulating wireless signals, the method comprising:
performing demodulation on a plurality of received modulation symbols to identify a plurality of source transmitters for the plurality of received modulation symbols, wherein the identified plurality of source transmitters (110-140) comprises each of a predefined set of transmitters;
comparing spectrum envelopes of the plurality of received modulation symbols with a spectrum envelope of a target received modulation symbol to select one or more of the plurality of source transmitters, wherein the one or more of the plurality of source transmitters (110-140) are a reduced subset of the plurality of source transmitters (110-140), wherein the target received modulation symbol is not part of the plurality of the received modulation symbols, and wherein the target received modulation symbol and the plurality of the received modulation symbols are in the same symbol period; and
performing demodulation on the target received modulation symbol based on the selected one or more of the plurality of source transmitters to identify a source transmitter for the target received modulation symbol.

14. The method of claim 13, wherein the demodulation on the target received modulation symbol based on the selected one or more of the plurality of source transmitters identifies a transmitted modulation symbol.

15. The method of claim 14, further comprising recovering a transmit bit vector for the target received modulation symbol based on the transmitted modulation symbol and an identity of the source transmitter.

## Patentansprüche

1. Kommunikationsvorrichtung (102), die für drahtlose Kommunikationen konfiguriert ist, wobei die Kommunikationsvorrichtung umfasst:
einen Detektor (802), der so konfiguriert ist, dass er Demodulation an einer Mehrzahl von empfangenen Modulationssymbolen durchführt, um eine Mehrzahl von Ursprungssendern (110-140) für die Mehrzahl von empfangenen Modulationssymbolen zu identifizieren, wobei die identifizierte Mehrzahl von Ursprungssendern (110-140) jeden eines vordefinierten Satzes von Sendern umfasst; und
einen Selektor (808), der so konfiguriert ist, dass er Spektralhüllkurven der Mehrzahl von empfangenen Modulationssignalen mit einer Spektralhüllkurve eines empfangenen Zielmodulationssymbols vergleicht, um einen oder mehrere der Mehrzahl von Ursprungssendern auszuwählen, wobei der eine oder die mehreren der Mehrzahl von Ursprungssendern (110-140) ein reduzierter Teilsatz der Mehrzahl von Ursprungssendern (110-140) sind, wobei das empfangene Zielmodulationssymbol nicht zu der Mehrzahl von empfangenen Modulationssymbolen gehört, und wobei das empfangene Zielmodulationssymbol und die empfangenen Modulationssymbole in der gleichen Symbolperiode sind,
wobei der Detektor (802) ferner so konfiguriert ist, dass er Demodulation am empfangenen Zielmodulationssymbol basierend auf dem einen oder den mehreren ausgewählten der Mehrzahl von Ursprungssendern (110-140) durchführt, um einen Ursprungssender für das empfangene Zielmodulationssymbol aus dem reduzierten Teilsatz zu identifizieren.

2. Kommunikationsvorrichtung (102) nach Anspruch 1, wobei der Detektor (802) ferner zum Identifizieren eines gesendeten Modulationssymbols für das empfangene Zielmodulationssymbol durch Demodulation konfiguriert ist.

3. Kommunikationsvorrichtung (102) nach Anspruch 2, ferner umfassend einen Demapper (810), der zum Wiederherstellen eines Sendebitvektors für das empfangene Zielmodulationssymbol basierend auf dem gesendeten Modulationssymbol und einer Identität des Ursprungssenders konfiguriert ist.

4. Kommunikationsvorrichtung (102) nach Anspruch 3, wobei der Demapper (810) so konfiguriert ist, dass er einen ersten Komponentenvektor des Sendebitvektors durch Rückabbilden der gesendeten Modulationssymboldaten bestimmt, um entsprechende digitale Bits zu erhalten, und einen zweiten Komponentenvektor des Sendebitvektors durch Identifizieren eines Senderindexes bestimmt, der dem Ursprungssender zugeordnet ist.

5. Kommunikationsvorrichtung (102) nach einem der Ansprüche 3 bis 4, wobei der Detektor (802), der Selektor (808) und der Demapper (810) so konfiguriert sind, dass sie einen Sendebitvektor für jedes einer zweiten Mehrzahl von empfangenen Modulationssymbolen wiederherstellen, welches das empfangene Zielmodulationssymbol umfasst, wobei jedes der Mehrzahl von empfangenen Modulationssymbolen und der zweiten Mehrzahl von empfangenen Modulationssymbolen verschiedenen Unterträgern in einer gleichen Symbolperiode entspricht.

6. Kommunikationsvorrichtung (102) nach einem der Ansprüche 1 bis 5, ferner umfassend einen Kanalschätzer (804), der zum Schätzen eines effektiven Kanals für jeden der Mehrzahl von Ursprungssendern konfiguriert ist, wobei der Detektor (802) zum Durchführen der Demodulation am empfangenen Zielmodulationssymbol unter Verwendung der effektiven Kanäle für den einen oder die mehreren ausgewählten der Mehrzahl von Ursprungssendern (110-140) konfiguriert ist.

7. Kommunikationsvorrichtung (102) nach Anspruch 6, wobei der Detektor (802) zum Durchführen der Demodulation am empfangenen Zielmodulationssymbol unter Verwendung der effektiven Kanäle für den einen oder die mehreren ausgewählten der Mehrzahl von Ursprungssendern (110-140) konfiguriert ist, während er andere Sender der Mehrzahl von Ursprungssendern der Mehrzahl von Ursprungssendern (110-140) davon ausschließt, der Ursprungssender für das empfangene Zielmodulationssymbol zu sein.

8. Kommunikationsvorrichtung (102) nach Anspruch 6, wobei der Detektor (802) so konfiguriert ist, dass er den Ursprungssender für das empfangene Zielmodulationssymbol identifiziert, indem er bestimmt, welche der effektiven Kanäle für den einen oder die mehreren ausgewählten der Mehrzahl von Ursprungssendern (110-140) ein wahrscheinlichstes Demodulationsergebnis gemäß einer Detektion der maximalen Wahrscheinlichkeit, ML, erzeugen, und indem er den Sender der Mehrzahl von Ursprungssendern (110-140), der dem bestimmten effektiven Kanal entspricht, als den Ursprungssender identifiziert.

9. Kommunikationsvorrichtung (102) nach einem der Ansprüche 1 bis 8, wobei der Selektor (808) so konfiguriert ist, dass er die Spektralhüllkurven der Mehrzahl von empfangenen Modulationssymbolen mit der Spektralhüllkurve des empfangenen Zielmodulationssymbols vergleicht, um den einen oder die mehreren ausgewählten der Mehrzahl von Ursprungssendern (110-140) auszuwählen durch:
Berechnen eines jeweiligen Abstands zwischen der Spektralhüllkurve des empfangenen Zielmodulationssymbols und jeder der Spektralhüllkurven der Mehrzahl von empfangenen Modulationssymbolen; und
Auswählen des einen oder der mehreren ausgewählten der Mehrzahl von Ursprungssendern (110-140) basierend darauf, welche der jeweiligen Abstände am kürzesten sind.

10. Kommunikationsvorrichtung (102) nach einem der Ansprüche 1 bis 9, wobei jeder der Mehrzahl von Ursprungssendern (110-140) der Ursprungssender für mindestens eines der Mehrzahl von empfangenen Modulationssymbolen ist.

11. Kommunikationsvorrichtung (102) nach einem der Ansprüche 1 bis 10, konfiguriert als eine Basisbandverarbeitungskomponente (206) für eine Endgerätevorrichtung (102).

12. Kommunikationsvorrichtung (102) nach einem der Ansprüche 1 bis 10, ferner umfassend einen Hochfrequenz-,HF-,Sender (204), der so konfiguriert ist, dass er HF-Drahtlossignale empfängt und verarbeitet, um Basisbanddaten zu erhalten, welche die Mehrzahl von empfangenen Modulationssymbolen und das empfangene Zielmodulationssymbol umfassen.

13. Verfahren zur Verarbeitung und Demodulation von Drahtlossignalen, wobei das Verfahren umfasst:
Durchführen von Demodulation an einer Mehrzahl von empfangenen Modulationssymbolen, um eine Mehrzahl von Ursprungssendern für die Mehrzahl von empfangenen Modulationssymbolen zu identifizieren, wobei die identifizierte Mehrzahl von Ursprungssendern (110-140) jeweils einen vordefinierten Satz von Sendern umfasst;
Vergleichen von Spektralhüllkurven der Mehrzahl von empfangenen Modulationssignalen mit einer Spektralhüllkurve eines empfangenen Zielmodulationssymbols, um einen oder mehrere der Mehrzahl von Ursprungssendern auszuwählen, wobei der eine oder die mehreren der Mehrzahl von Ursprungssendern (110-140) ein reduzierter Teilsatz der Mehrzahl von Ursprungssendern (110-140) sind, wobei das empfangene Zielmodulationssymbol nicht zu der Mehrzahl von empfangenen Modulationssymbolen gehören, und wobei das empfangene Zielmodulationssymbol und die empfangenen Modulationssymbole in der gleichen Symbolperiode sind; und
Durchführen von Demodulation am empfangenen Zielmodulationssymbol basierend auf dem einen oder den mehreren ausgewählten der Mehrzahl von Ursprungssendern, um einen Ursprungssender für das empfangene Zielmodulationssymbol zu identifizieren.

14. Verfahren nach Anspruch 13, wobei die Demodulation am empfangenen Zielmodulationssymbol basierend auf dem einen oder den mehreren ausgewählten der Mehrzahl von Ursprungssendern ein gesendetes Modulationssymbol identifiziert.

15. Verfahren nach Anspruch 14, ferner umfassend ein Wiederherstellen eines Sendebitvektors für das empfangene Zielmodulationssymbol basierend auf dem gesendeten Modulationssymbol und einer Identität des Ursprungssenders.

## Revendications

1. Dispositif de communication (102) configuré pour des communications sans fil, le dispositif de communication comprenant :
un détecteur (802) configuré pour exécuter une démodulation sur une pluralité de symboles de modulation reçus pour identifier une pluralité d'émetteurs sources (110-140) pour la pluralité de symboles de modulation reçus, dans lequel la pluralité identifiée d'émetteurs sources (110-140) comprend chaque émetteur d'un ensemble prédéfini d'émetteurs ;
un sélecteur (808) configuré pour comparer les enveloppes spectrales de la pluralité de symboles de modulation reçus à une enveloppe spectrale d'un symbole de modulation reçu cible pour sélectionner un ou plusieurs émetteurs de la pluralité d'émetteurs sources, dans lequel le ou les émetteurs de la pluralité d'émetteurs sources (110-140) sont un sous-ensemble réduit de la pluralité d'émetteurs sources (110-140), dans lequel le symbole de modulation reçu cible ne fait pas partie de la pluralité de symboles de modulation reçus, et dans lequel le symbole de modulation reçu cible et la pluralité de symboles de modulation reçus se trouvent dans la même période de symbole,
le détecteur (802) est en outre configuré pour exécuter une démodulation sur le symbole de modulation reçu cible sur la base du ou des émetteurs sélectionnés de la pluralité d'émetteurs sources (110-140) pour identifier un émetteur source pour le symbole de modulation reçu cible dans le sous-ensemble réduit.

2. Dispositif de communication (102) selon la revendication 1, dans lequel le détecteur (802) est en outre configuré pour identifier un symbole de modulation émis pour le symbole de modulation reçu cible par la démodulation.

3. Dispositif de communication (102) selon la revendication 2, comprenant en outre un dispositif d'extraction (810) configuré pour récupérer un vecteur binaire d'émission pour le symbole de modulation reçu cible sur la base du symbole de modulation émis et d'une identité de l'émetteur source.

4. Dispositif de communication (102) selon la revendication 3, dans lequel le dispositif d'extraction (810) est configuré pour déterminer une première composante vectorielle du vecteur binaire d'émission par extraction des données du symbole de modulation émis pour obtenir des bits numériques correspondants, et pour déterminer une seconde composante vectorielle du vecteur binaire d'émission par identification d'un indice d'émetteur attribué à l'émetteur source.

5. Dispositif de communication (102) selon l'une quelconque des revendications 3 à 4, dans lequel le détecteur (802), le sélecteur (808) et le dispositif d'extraction (810) sont configurés pour récupérer un vecteur binaire d'émission pour chaque symbole d'une seconde pluralité de symboles de modulation reçus qui inclut le symbole de modulation reçu cible, dans lequel chaque symbole de la pluralité de symboles de modulation et de la seconde pluralité de symboles de modulation reçus correspond à des sous-porteuses différentes dans une même période de symbole.

6. Dispositif de communication (102) selon l'une quelconque des revendications 1 à 5, comprenant en outre un dispositif d'estimation de canal (804) configuré pour estimer un canal équivalent pour chaque émetteur de la pluralité d'émetteurs sources, dans lequel le détecteur (802) est configuré pour exécuter la démodulation sur le symbole de modulation reçu cible à l'aide des canaux équivalents pour le ou les émetteurs sélectionnés de la pluralité d'émetteurs sources (110-140).

7. Dispositif de communication (102) selon la revendication 6, dans lequel le détecteur (802) est configuré pour exécuter la démodulation sur le symbole de modulation reçu cible à l'aide des canaux équivalents pour le ou les émetteurs sélectionnés de la pluralité d'émetteurs sources (110-140) tout en empêchant les autres émetteurs de la pluralité d'émetteurs sources (110-140) d'être l'émetteur source pour le symbole de modulation reçu cible.

8. Dispositif de communication (102) selon la revendication 6, dans lequel le détecteur (802) est configuré pour identifier l'émetteur source pour le symbole de modulation reçu cible par détermination des canaux équivalents pour le ou les émetteurs sélectionnés de la pluralité d'émetteurs sources (110-140) qui produisent un résultat de démodulation le plus probable conformément à une détection de probabilité maximale, ML, et par identification de l'émetteur de la pluralité d'émetteurs sources (110-140) qui correspond au canal équivalent déterminé comme l'émetteur source.

9. Dispositif de communication (102) selon l'une quelconque des revendications 1 à 8, dans lequel le sélecteur (808) est configuré pour comparer les enveloppes spectrales des symboles de la pluralité de symboles de modulation reçus à l'enveloppe spectrale du symbole de modulation reçu cible pour sélectionner le ou les émetteurs sélectionnés de la pluralité d'émetteurs sources (110-140) par :
calcul d'une distance respective entre l'enveloppe spectrale du symbole de modulation reçu cible et chacune des enveloppes spectrales des symboles de la pluralité de symboles de modulation reçus ; et
sélection du ou des émetteurs sélectionnés de la pluralité d'émetteurs sources (110-140) sur la base des distances respectives les plus courtes.

10. Dispositif de communication (102) selon l'une quelconque des revendications 1 à 9, dans lequel chaque émetteur de la pluralité d'émetteurs sources (110-140) est l'émetteur source pour au moins l'un de la pluralité de symboles de modulation reçus.

11. Dispositif de communication (102) selon l'une quelconque des revendications 1 à 10, configuré en tant que composant de traitement de bande de base (206) pour un dispositif terminal (102).

12. Dispositif de communication (102) selon l'une quelconque des revendications 1 à 10, comprenant en outre un émetteur-récepteur radiofréquence, RF, (204) configuré pour recevoir et traiter des signaux RF sans fil pour obtenir des données de bande de base comprenant la pluralité de symboles de démodulation reçus et le symbole de modulation reçu cible.

13. Procédé de traitement et de démodulation de signaux sans fil, le procédé comprenant :
l'exécution d'une démodulation sur une pluralité de symboles de modulation reçus pour identifier une pluralité d'émetteurs sources pour la pluralité de symboles de modulation reçus, dans lequel la pluralité d'émetteurs identifiée d'émetteurs sources (110-140) comprend chaque émetteur d'un ensemble prédéfini d'émetteurs ;
la comparaison d'enveloppes spectrales de la pluralité de symboles de modulation reçus à une enveloppe spectrale d'un symbole de modulation reçu cible pour sélectionner un ou plusieurs émetteurs de la pluralité d'émetteurs sources, dans lequel le ou les émetteurs de la pluralité d'émetteurs sources (110-140) sont un sous-ensemble réduit de la pluralité d'émetteurs sources (110-140), dans lequel le symbole de modulation reçu cible ne fait pas partie de la pluralité de symboles de modulation reçus, et dans lequel le symbole de modulation reçu cible et la pluralité de symboles de modulation reçus se trouvent dans la même période de symbole ; et
l'exécution d'une démodulation sur le symbole de modulation reçu cible sur la base du ou des émetteurs sélectionnés de la pluralité d'émetteurs sources pour identifier un émetteur source pour le symbole de modulation reçu cible.

14. Procédé selon la revendication 13, dans lequel la démodulation sur le symbole de modulation reçu cible sur la base du ou des émetteurs sélectionnés de la pluralité d'émetteurs sources identifie un symbole de modulation émis.

15. Procédé selon la revendication 14, comprenant en outre la récupération d'un vecteur binaire d'émission pour le symbole de modulation reçu cible sur la base du symbole de modulation émis et d'une identité de l'émetteur source.
